(19) Europäisches Patentamt
European Patent Office
Office européen des brevets

(11) **EP 3 715 204 A1**

(12) **EUROPEAN PATENT APPLICATION**
published in accordance with Art. 153(4) EPC

(43) Date of publication:
**30.09.2020 Bulletin 2020/40**

(51) Int Cl.:
**B60W 30/10** *(2006.01)*          **B60W 30/09** *(2012.01)*
**B60W 30/12** *(2020.01)*

(21) Application number: **18897451.3**

(22) Date of filing: **27.12.2018**

(86) International application number:
**PCT/JP2018/048232**

(87) International publication number:
**WO 2019/131903 (04.07.2019 Gazette 2019/27)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.12.2017 JP 2017253719**

(71) Applicant: **MAZDA MOTOR CORPORATION**
**Fuchu-cho, Aki-gun**
**Hiroshima 730-8670 (JP)**

(72) Inventors:
• **AWANE, Rie**
  **Aki-gun, Hiroshima 730-8670 (JP)**
• **OHMURA, Hiroshi**
  **Aki-gun, Hiroshima 730-8670 (JP)**
• **TACHIHATA, Tetsuya**
  **Aki-gun, Hiroshima 730-8670 (JP)**

(74) Representative: **Herrmann, Uwe**
**Lorenz Seidler Gossel**
**Rechtsanwälte Patentanwälte**
**Partnerschaft mbB**
**Widenmayerstraße 23**
**80538 München (DE)**

(54) **VEHICLE CONTROL DEVICE**

(57)     Provided is a vehicle control device capable of reducing a computational load thereon. The vehicle control device (100) includes: an obstacle detection part (10a); a target traveling course calculation part (10c); a corrected traveling course calculation part (10d); a main control part (10f); a backup control part (10e); and an output adjustment part (10g) to output a target steering angle and a target acceleration/deceleration, wherein the corrected traveling course calculation part is configured to set an upper limit of a permissible relative speed with respect to an obstacle, and to calculate the corrected traveling course, based on the upper limit, a given evaluation function, and a given limiting condition, wherein the output adjustment part is configured to output, as the control signal, a target steering angle and a target acceleration/deceleration in a situation where it is unable to calculate any corrected traveling course satisfying the limiting condition.

FIG.2

EP 3 715 204 A1

**Description**

TECHNICAL FIELD

The present invention relates to a vehicle control device, and more particularly to a vehicle control device for supporting a driver to drive a vehicle.

BACKGROUND ART

In JP 2010-155545A (Patent Document 1), there is described a vehicle control device. This vehicle control device is configured to, during emergency obstacle avoidance, select one of braking-based avoidance control (based on only brake manipulation) and steering-based avoidance control (based on only steering manipulation), according to an inter-vehicle distance from a second vehicle at that time, and compute a target traveling course, using optimization processing. In this vehicle control device, when the braking-based avoidance control is selected, conditions for the computation will be simplified and limited to only a longitudinal (vehicle forward-rearward directional) motion. On the other hand, when the steering-based avoidance control is selected, the conditions for the computation will be simplified and limited to only a lateral (vehicle width directional) motion. As above, this technique allows a computational load to be reduced during an emergency, so that it is possible to shorten a computational time period while ensuring a high computational accuracy.

CITATION LIST

[Patent Document]

Patent Document 1: JP 2010-155545A

SUMMARY OF INVENTION

[Technical Problem]

However, in the invention described in the Patent Document 1, obstacle avoidance is limited to one of the braking-based avoidance control and the steering-based avoidance control. Therefore, there can arise a situation where a vehicle traveling course selected by the vehicle control device is not always appropriate, and this situation involves a problem of giving a driver a strong feeling of strangeness.

The present invention has been made to solve the above problem, and an object thereof is to provide a vehicle control device capable of reducing a computational load thereon, while making it less likely to give a driver a feeling of strangeness.

[Solution to Technical Problem]

In order to solve the above object, the present invention provides a vehicle control device for supporting a driver to drive a vehicle. The vehicle control device comprises: an obstacle detection part to detect an obstacle; a target traveling course calculation part to calculate a target traveling course of an own vehicle; a corrected traveling course calculation part to correct the target traveling course calculated by the target traveling course calculation part, to calculate a corrected traveling course; a main control part to compute a target steering angle and a target acceleration/deceleration appropriate for traveling on the corrected traveling course calculated by the corrected traveling course calculation part; a backup control part to compute the target steering angle and the target acceleration/deceleration appropriate for traveling on the target traveling course calculated by the target traveling course calculation part; and an output adjustment part to output, as a control signal, the target steering angle and the target acceleration/deceleration calculated by the main control part, or the target steering angle and the target acceleration/deceleration calculated by the backup control part, wherein: the corrected traveling course calculation part is configured to, set an upper limit of a relative speed which is permissible when the own vehicle passes a lateral side of the obstacle, and to calculate the corrected traveling course based on the upper limit of the relative speed, a given evaluation function, and a given limiting condition, when the obstacle to be avoided is detected by the obstacle detection part; and the output adjustment part is configured to output, as the control signal, the target steering angle and the target acceleration/deceleration calculated by the backup control part when the corrected traveling course calculation part fails to calculate any corrected traveling course satisfying the limiting condition.

In the vehicle control device of the present invention having the above feature, when an obstacle to be avoided is detected by the obstacle detection part, the corrected traveling course calculation part operates to set an upper limit of a relative speed which is permissible when the own vehicle passes the lateral side of the obstacle. The corrected traveling course calculation part also operates to correct the target traveling course, based on the upper limit of the relative speed, a given evaluation function, and a given limiting condition, to calculate a corrected traveling course. The main control part operates to compute a target steering angle and a target acceleration/deceleration appropriate for traveling on the corrected traveling course calculated by the corrected traveling course calculation part. As above, the main control part operates to compute the target steering angle and the target acceleration/deceleration appropriate for traveling on the corrected traveling course obtained by correcting the target traveling course, so that it is possible to reduce a computational load on the vehicle control device. Further, when the corrected traveling course calculation part fails to calculate any corrected traveling course satisfying the limiting condition, the output adjustment part operates to output, as the control signal, the target steering angle and the target acceleration/deceleration calculated by the backup control part. Thus, even in the situation where no corrected traveling course satisfying the limiting condition is obtained, it is possible to allow the own vehicle to travel on the target traveling course, based on the target steering angle and the target acceleration/deceleration calculated by the backup control part. This makes it possible to reduce a feeling of strangeness to be given to the driver.

Preferably, the vehicle control device of the present invention, the limiting condition is set in a region outside a lane in which the own vehicle is traveling.

According to this feature, the limiting condition is set in a region outside a lane in which the own vehicle is traveling, so that it is possible to avoid a situation where the corrected traveling course is calculated to pass through the outside of the lane in which the own vehicle is traveling, and the backup control part makes it possible to allow the own vehicle to travel on the target traveling course with a less feeling of strangeness to the driver.

Preferably, the vehicle control device of the present invention further comprises a driving support mode setting unit for allowing selection among a plurality of driving support modes, wherein the limiting condition is set differently depending on a selected one of the driving support modes, so as to define a region in which the own vehicle is permitted to travel.

According to this feature, the limiting condition is set differently depending on a selected one of the driving support modes, so as to define a region in which the own vehicle is permitted to travel, so that it is possible to appropriately calculate the corrected traveling course according to the driving support modes. Further, even in the situation where no corrected traveling course satisfying this limiting condition is obtained, the backup control part makes it possible to allow the own vehicle to travel on the target traveling course with a less feeling of strangeness to the driver.

Preferably, in the vehicle control device of the present invention, the limiting condition includes a traveling parameter regarding a motion of the own vehicle.

According to this feature, the limiting condition includes a traveling parameter regarding a motion of the own vehicle, so that a traveling course causing an unreasonable motion of the own vehicle can be excluded, even when it is a travelable traveling course. Further, even in the situation where no corrected traveling course satisfying this limiting condition is obtained, the backup control part makes it possible to allow the own vehicle to travel on the target traveling course with a less feeling of strangeness to the driver.

More preferably, in the above vehicle control device, the traveling parameter includes an acceleration of the own vehicle, a yaw rate of the own vehicle, or a steering angle of the own vehicle.

According to this feature, the traveling parameter to be used as the limiting condition includes an acceleration of the own vehicle, a yaw rate of the own vehicle, or a steering angle of the own vehicle, so that a traveling course causing an excessive increase in acceleration or the like of the own vehicle can be excluded, even when it is a travelable traveling course. Further, even in the situation where no corrected traveling course satisfying this limiting condition is obtained, the backup control part makes it possible to allow the own vehicle to travel on the target traveling course with a less feeling of strangeness to the driver.

Preferably, in the vehicle control device of the present invention, the backup control part is configured to change only the target acceleration/deceleration so as to avoid a situation where the own vehicle traveling on the target traveling course enters a region which does not satisfy the upper limit of the relative speed.

The target traveling course is not subjected to traveling course correction with respect to an obstacle to be avoided. Thus, if the own vehicle continues to travel on the target traveling course, the vehicle speed thereof will exceed the upper limit of the relative speed. According to the above feature, the acceleration/deceleration of the own vehicle traveling on the target traveling course is calculated so as to avoid the situation where the own vehicle enters a region which does not satisfy the upper limit of the relative speed, so that it is possible to avoid collision without giving the driver a strong feeling of strangeness, while reducing the computational load on the vehicle control device.

[Effect of Invention]

The vehicle control device of the present invention can reduce the computational load thereon, while making it less likely to give a driver a feeling of strangeness.

BRIEF DESCRIPTION OF DRAWINGS

FIG. 1A is a configuration diagram of a vehicle control device according to one embodiment of the present invention.
FIG. 1B is a diagram showing details of a driver manipulation unit in the vehicle control device according to this embodiment.
FIG. 2 is a control block diagram of the vehicle control device according to this embodiment.
FIG. 3 is an explanatory diagram of a first traveling course to be computed by the vehicle control device according to this embodiment.
FIG. 4 is an explanatory diagram of a second traveling course to be computed by the vehicle control device according to this embodiment.
FIG. 5 is an explanatory diagram of a third traveling course to be computed by the vehicle control device according to this embodiment.
FIG. 6 is an explanatory diagram of obstacle avoidance by correction of a target traveling course in the vehicle control device according to this embodiment.
FIG. 7 is an explanatory diagram showing a relationship between a permissible upper limit of a pass-by speed and a clearance between an obstacle and an own vehicle during avoidance of the obstacle, in the vehicle control device according to this embodiment.
FIG. 8 is an explanatory diagram of a vehicle model in the vehicle control device according to this embodiment.
FIG. 9 is a diagram showing one example of a limiting condition on traveling course to be satisfied by corrected traveling course candidates, in the vehicle control device according to this embodiment.
FIG. 10 is a diagram showing another example of the limiting condition on traveling course to be satisfied by corrected traveling course candidates, in the vehicle control device according to this embodiment.
FIG. 11 is a diagram showing yet another example of the limiting condition on traveling course to be satisfied by corrected traveling course candidates, in the vehicle control device according to this embodiment.
FIG. 12 is a diagram showing still another example of the limiting condition on traveling course to be satisfied by corrected traveling course candidates, in the vehicle control device according to this embodiment.
FIG. 13 is a table showing a limiting condition on traveling parameters to be satisfied by corrected traveling course candidates, in the vehicle control device according to this embodiment.
FIG. 14 is a flowchart showing a process of computing a target steering angle and a target acceleration/deceleration by an ECU, based on input information from a vehicle exterior camera and other sensors, in the vehicle control device according to this embodiment.
FIG. 15 is a diagram showing one example of a situation where there is no corrected traveling course candidate satisfying a given limiting condition, among a plurality of corrected traveling course candidates generated in such a manner as to avoid cutting across an upper limit line of a permissible relative speed, in the vehicle control device according to this embodiment.
FIG. 16 is a diagram showing one example of a situation where calculation of the corrected traveling course becomes impossible due to the traveling behavior of a surrounding vehicle, in the vehicle control device according to this embodiment.
FIG. 17 is a diagram showing one example of a situation where an evaluation function has a plurality of extreme values, in the vehicle control device according to this embodiment.
FIG. 18 is a diagram showing a situation where there is no abnormality in a forward radar and the vehicle exterior camera, and a rearward radar is in a failed state, in the vehicle control device according to this embodiment.

DESCRIPTION OF EMBODIMENTS

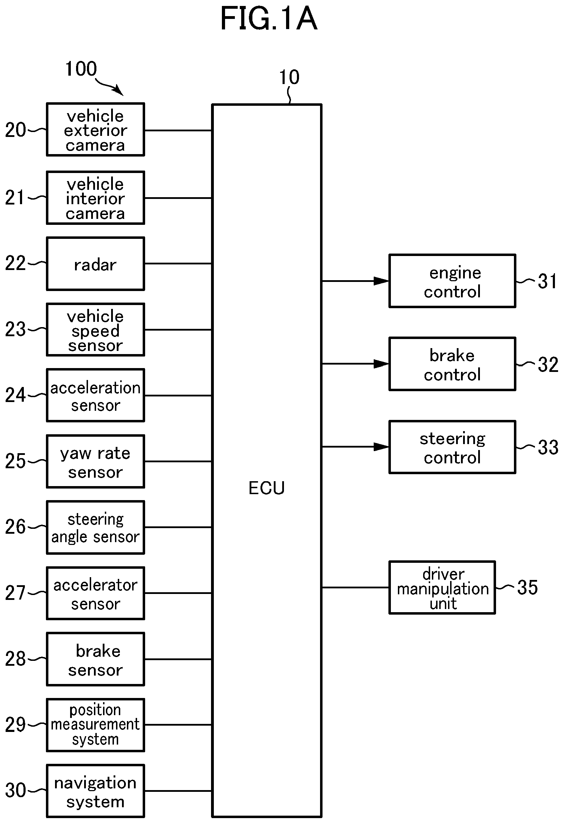

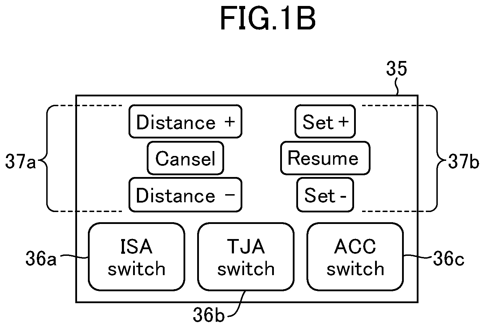

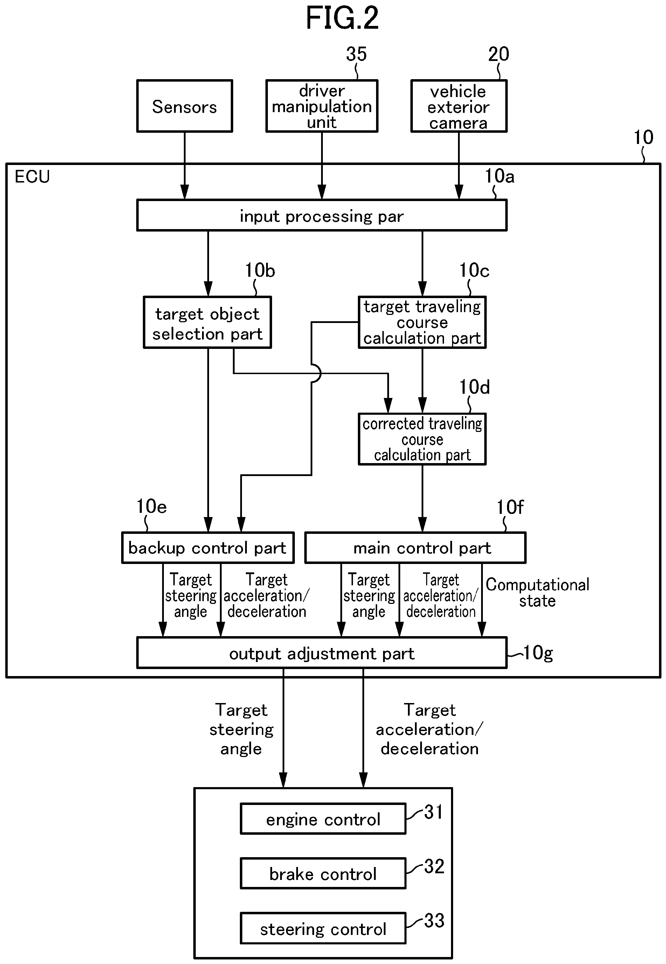

With reference to the accompanying drawings, a vehicle control device according to one embodiment of the present invention will now be described. First of all, the configuration of the vehicle control device according to this embodiment will be described with reference to FIGS. 1A, 1B and 2. FIG. 1A is a configuration diagram of the vehicle control device, and FIG. 1B is a diagram showing details of a driver manipulation unit. FIG. 2 is a control block diagram of the vehicle control device.

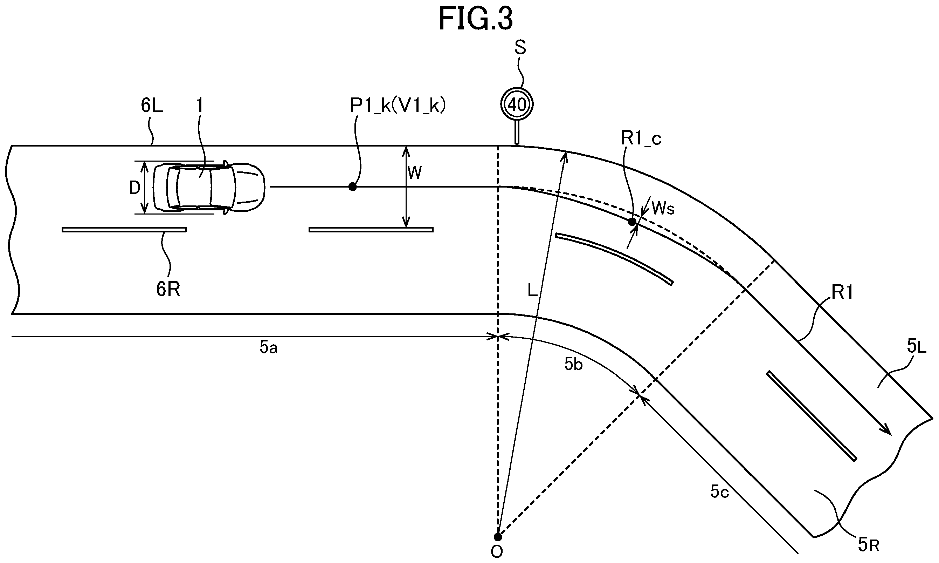

The vehicle control device 100 according to this embodiment is configured to provide various driving support controls to a vehicle 1 (see FIG. 3, etc.) equipped with the device, according to respective ones of a plurality of driving support modes. From among the plurality of driving support modes, a driver can select one desired driving support mode.

As shown in FIG. 1A, the vehicle control device 100 comprises: a vehicle control and computing unit (ECU) 10, a plurality of sensors and switches, a plurality of control systems, and a driver manipulation unit 35 for allowing user input regarding the driving support modes, each equipped in the vehicle (own vehicle) 1. The sensors and switches include: a vehicle exterior camera 20 which is a forward camera; a vehicle interior camera 21; a millimeter-wave radar 22; a plurality of behavior sensors each for detecting the behavior of the vehicle (a vehicle speed sensor 23, an acceleration sensor 24, and a yaw rate sensor 25); a plurality of behavior sensors each for detecting the behavior of the driver (a steering angle sensor 26, an accelerator sensor 27, and a brake sensor 28); a position measurement system 29; and a navigation system 30. Further, the control systems include an engine control system 31, a brake control system 32 and a steering control system 33.

As shown in FIG. 1B, the driver manipulation unit 35 is provided in a vehicle interior (passenger compartment) of the vehicle 1 such that it can be manipulated by the driver, and functions as a driving support mode setting unit for selecting one desired driving support mode from among the plurality of driving support modes. The driver manipulation unit 35 is provided with an ISA switch 36a for setting a speed limiting mode, a TJA switch 36b for setting a preceding vehicle following mode, and an ACC switch 36c for setting an automatic speed control mode. The driver manipulation unit 35 is further provided with a distance setting switch 37a for setting an inter-vehicle distance in the preceding vehicle following mode, and a vehicle speed setting switch 37b for setting a vehicle speed in the automatic speed control mode, etc.

The ECU 10 illustrated in FIG. 1A is composed of a computer comprising a CPU, a memory storing therein various programs, and an input-output device. The ECU 10 is configured to be operable, based on a driving support mode selection signal and a setting vehicle speed signal received from the driver manipulation unit 35, and signals received from the sensors and switches, to output request signals for appropriately operating an engine system, a brake system and a steering system, respectively, to the engine control system 31, the brake control system 32 and the steering control system 33.

The vehicle exterior camera 20 is configured to capture an image forward of the vehicle 1 and output captured image data. The ECU 10 is operable to identify an object (e.g., a vehicle, a pedestrian, a road, a demarcation line (a lane border line, a white road line or a yellow road line), a traffic light, a traffic sign, a stop line, an intersection, an obstacle or the like) based on the image data. Additionally, it is possible to provide a vehicle exterior camera for capturing an image laterally outward or rearward of the vehicle 1. In this embodiment, the vehicle is also equipped with a vehicle interior camera 21 for capturing an image of the driver during driving of the vehicle 1. Here, the ECU 10 may be configured to acquire information regarding such an object, from outside through an in-vehicle communication device, by means of transportation infrastructure, inter-vehicle communication, etc.

The millimeter-wave radar 22 is a measurement device for measuring the position and speed of the object (particularly, a preceding vehicle, a parked vehicle, a pedestrian, an obstacle or the like), and is configured to transmit a radio wave (transmitted wave) forwardly with respect to the vehicle 1 and receive a reflected wave produced as a result of reflection of the transmitted wave by the object. The millimeter-wave radar 22 is further configured to measure, based on the transmitted wave and the received wave, a distance between the vehicle 1 and the object, i.e., a vehicle-object distance, (e.g., inter-vehicle distance) and/or a relative speed of the object with respect to the vehicle 1. In this embodiment, as the millimeter-wave radar 22, there are provided a forward radar for detecting an object forward of the vehicle 1, a lateral radar for detecting an object laterally outward of the vehicle 1; and a rearward radar for detecting an object rearward of the vehicle 1. Further, instead of the millimeter-wave radar 22, a laser radar, an ultrasonic sensor or the like may be used to measure the vehicle-object distance and/or the relative speed. Further, the position and speed measurement device may be composed using a plurality of other sensors.

The vehicle speed sensor 23 is configured to detect an absolute speed of the vehicle 1.

The accelerator sensor 24 is configured to detect an acceleration (a longitudinal (forward-rearward directional) acceleration, and a lateral (width directional) acceleration) of the vehicle 1. Here, the acceleration includes a speed-increasing side (positive acceleration) and a speed-reducing side (negative acceleration).

The yaw rate sensor 25 is configured to detect a yaw rate of the vehicle 1.

The steering angle sensor 26 is configured to detect a turning angle (steering angle) of a steering wheel of the vehicle 1.

The accelerator sensor 27 is configured to detect a depression amount of an accelerator pedal of the vehicle 1.

The brake sensor 28 is configured to detect a depression amount of a brake pedal of the vehicle 1.

The position measurement system 29 is composed of a GPS system and/or a gyro system, and is configured to detect the position of the vehicle 1 (current vehicle position information).

The navigation system 30 stores therein map information, and is configured to be operable to provide the map information to the ECU 10. Then, the ECU 10 is operable, based on the map information and the current vehicle position information, to identify a road, an intersection, a traffic light, a building and others existing around the vehicle 1 (particularly, ahead of the vehicle 1 in its travelling direction). It is to be understood that the map information may be stored in the ECU 10.

The engine control system 31 comprises a controller for controlling an engine of the vehicle 1. The ECU 10 is operable, when there is a need to accelerate or decelerate the vehicle 1, to output, to the engine control system 31, an engine output change request signal for requesting to change an engine output so as to obtain a target acceleration/deceleration.

The brake control system 32 comprises a controller for controlling a braking device of the vehicle 1. The ECU 10 is operable, when there is a need to decelerate the vehicle 1, to output, to the brake control system 32, a braking request signal for requesting to generate a braking force to be applied to the vehicle 1, so as to obtain the target acceleration/deceleration.

The steering control system 33 comprises a controller for controlling a steering device of the vehicle 1. The ECU 10 is operable, when there is a need to change the travelling direction of the vehicle 1, to output, to the steering control system 33, a steering direction change request signal for requesting to change a steering direction so as to obtain a target steering angle.

As shown in FIG. 2, the ECU 10 comprises a single CPU functioning as an input processing part 10a, a target object selection part 10b, a target traveling course calculation part 10c, a corrected traveling course calculation part 10d, a backup control part 10e, a main control part 10f, and an output adjustment part 19g. In this embodiment, the ECU 10 is configured such that the above functions are executed by the single CPU. Alternatively, the ECU may be configured such that the above functions are executed by a plurality of CPUs.

The input processing part 10a is configured to process input information from the vehicle exterior camera 20, other sensors and the driver manipulation unit 35. Specifically, the input processing part 10a functions as an image analysis part for analyzing an image of a traveling road captured by the vehicle exterior camera 20 to detect a traveling lane in which the own vehicle 1 is traveling (demarcation lines on opposed lateral sides of the lane). The input processing part 10a is configured to recognize a surrounding object which is an obstacle existing in the surroundings of the own vehicle, based on input signals from the sensors such as the millimeter-wave radar 22, and analysis of images from the vehicle exterior camera. Thus, in this embodiment, the input processing part 10a also functions as an obstacle detection part for detecting an obstacle. In this embodiment, the input processing part 10a is configured to recognize about thirty-five types of objects as surrounding objects, based on input information.

The target object selection part 10b is configured to select a target object relating to the driving support of the own vehicle, from among a plurality of surrounding objects recognized by the input processing part 10a. For example, surrounding objects such as a vehicle, a traffic sign, a pedestrian crossing and a pedestrian existing in the traveling direction of the own vehicle are selected as target objects by the target object selection part 10b. In this embodiment, the target object selection part 10b is configured to select about five objects as target objects, from among about thirty-five types of objects recognized by the input processing part 10a. The target objects to be selected by the target object selection part 10b are changed according to a traveling state of the own vehicle, and a set one of the driving support modes.

The target traveling course calculation part 10c is configured to calculate a target traveling course of the vehicle 1, based on input information from the millimeter-wave radar 22, the vehicle exterior camera 21, other sensors and the like.

The corrected traveling course calculation part 10d is configured to correct the target traveling course calculated by the target traveling course calculation part 10c, to calculate a corrected traveling course. As one example, the corrected traveling course calculation part 10d is configured to set an upper limit line of a permissible relative speed at which the vehicle 1 is permitted to travel with respect to a target object to be avoided, selected by the target object selection part 10b, and correct the target traveling course calculated by the target traveling course calculation part 10c, in such a manner as to satisfy the upper limit line.

The corrected traveling course calculation part 10d is further configured to, from among a plurality of traveling courses satisfying the upper limit line of the permissible relative speed at which the own vehicle is permitted to travel with respect to the target object, select one or more traveling courses satisfying a given limiting condition, and, from among the selected one or more traveling courses, determine one traveling course which is the smallest in terms of a given evaluation function, as an optimal corrected traveling course. That is, the corrected traveling course calculation part 10d is configured to calculate a corrected traveling course based on the upper limit line, the given evaluation function and the given limiting condition. In this embodiment, the limiting condition for determining the optimal corrected traveling course is set differently depending on a selected one of the driving support modes, and the state of driving by the driver.

The main control part 10f is operable to calculate the target steering angle and the target acceleration/deceleration appropriate for traveling on the corrected traveling course calculated by the corrected traveling course calculation part 10d. Further, the backup control part 10e is operable to calculate the target steering angle and the target acceleration/deceleration appropriate for traveling on the target traveling course calculated by the target traveling course calculation part 10c.

The output adjustment part 10g is operable to output, as a control signal, the target steering angle and the target acceleration/deceleration calculated by the main control part 10f, or the target steering angle and the target acceleration/deceleration calculated by the backup control part 10e.

That is, the ECU 10 is operable to output a request signal to at least one or more of the engine control system 31, the brake control system 32 and the steering control system 33, so as to achieve the target acceleration/deceleration output and the target steering angle output from the output adjustment part 10g.

Next, the driving support modes to be executed by the vehicle control device 100 according to this embodiment will be described. In this embodiment, the driving support modes consist of four modes. Specifically, the driving support modes consist of: the speed limiting mode which is to be executed in response to manipulation of the ISA switch 36a and is a manual steering mode; the preceding vehicle following mode which is to be executed in response to manipulation of the TJA switch 36b and is an automatic steering mode; the automatic speed control mode which is to be executed in response to manipulation of the ACC switch 36c and is a manual steering mode; and a basic control mode which is to be executed when none of the above three driving support modes is selected.

< Preceding Vehicle Following Mode >

The preceding vehicle following mode is basically an automatic steering mode in which the vehicle 1 is controlled to travel following a preceding vehicle, while maintaining a given inter-vehicle distance between the vehicle 1 and the preceding vehicle, and involves steering control, automatic speed control (engine control and/or brake control), and automatic obstacle avoidance control (the speed control and the steering control) to be automatically executed by the vehicle control device 100.

In the preceding vehicle following mode, each of the steering control and the speed control is performed in different manners depending on detectability of opposed lane edges, and the presence or absence of a preceding vehicle. Here, the term "opposed lane edges" means opposed edges (one of which is a demarcation line such as a white road line, a road edge, an edge stone, a median strip, a guardrail or the like) of a lane in which the vehicle 1 is traveling, i.e., borderlines with respect to, e.g., a neighboring lane and sidewalk. The input processing part 10a comprised in the ECU 10 is operable to detect the opposed lane edges from the image data captured by the vehicle exterior camera 20. Alternatively, the input processing part 10a may be configured to detect the opposed lane edges from the map information of the navigation system 30. However, for example, in a situation where the vehicle 1 is traveling on the plain on which there is no traffic lane, instead of on a well-maintained road, or in a situation where reading of the image data from the vehicle exterior camera 20 is bad, there is a possibility of failing to detect the opposed lane edges.

Further, in this embodiment, the ECU 10 is operable, when serving as a preceding vehicle detection part, to detect a preceding vehicle, based on the image data from the vehicle exterior camera 20, and the measurement data from the forward radar comprised in the millimeter-wave radar 22. Specifically, the ECU 10 is operable to detect, as a preceding vehicle, a second vehicle which is traveling ahead of the vehicle 1, based on the image data from the vehicle exterior camera 20. Further, in this embodiment, the ECU 10 is operable, when the inter-vehicle distance between the vehicle 1 and the second vehicle is determined to be equal to or less than a given value (e.g., 400 to 500 m), based on the measurement data from the millimeter-wave radar 22, to detect the second vehicle as a preceding vehicle.

In a situation where, in the preceding vehicle following mode, a surrounding object to be avoided is detected by the input processing part 10a, the target traveling course is corrected to automatically avoid the obstacle (surrounding object), irrespective of the presence or absence of a preceding vehicle, and the detectability of opposed lane edges.

< Automatic Speed Control Mode >

The automatic speed control mode is a manual steering mode in which the speed control is performed such that the vehicle 1 maintains a given setup vehicle speed (constant speed) preliminarily set by the driver using the vehicle speed setting switch 37b, and which involves the speed control (the engine control and/or the brake control) to be automatically executed by the vehicle control device 100, but does not involves the steering control. In this automatic speed control mode, although the vehicle 1 is controlled to travel while maintaining the setup vehicle speed, the driver can increase the vehicle speed beyond the setup vehicle speed by depressing the accelerator pedal. Further, when the driver performs brake manipulation, priority is given to the intent of the driver, and therefore the vehicle 1 is decelerated from the setup vehicle speed. Further, when the vehicle 1 catches up to a preceding vehicle, the speed control is performed such that the vehicle 1 follows the preceding vehicle while maintaining an inter-vehicle distance appropriate to a follow-up vehicle speed, and then when the preceding vehicle disappears, the speed control is performed such that the follow-up vehicle speed is returned to the setup vehicle speed.

< Speed Limiting Mode >

The speed limiting mode is a manual steering mode in which the speed control is performed to prevent the vehicle speed of the vehicle 1 from exceeding a speed limit (legal speed limit) designated by a speed sign, or the setup vehicle speed set by the driver, and which involves the speed control (engine control) to be automatically executed by the vehicle control device 100. With regard to the speed limit, the ECU 10 may be configured to subject image data about an image of a speed sign or a speed marking on a road surface captured by the vehicle exterior camera 20, to image recognition processing, to identify the legal speed limit, or may be configured to receive information regarding the speed limit from the outside via a wireless communication. In the speed limiting mode, even when the driver depresses the accelerator pedal so as to increase the vehicle speed beyond the speed limit or the setup vehicle speed, the vehicle speed of the vehicle 1 is increased only up to the speed limit or the setup vehicle speed.

< Basic Control Mode >

The basic control mode is a mode (off mode) in which none of the above three driving support modes is selected through the driver manipulation unit 35, and the steering control and speed control are not automatically executed by the vehicle control device 100. However, in a situation where there is a possibility that the vehicle 1 collides with an oncoming vehicle or the like, collision avoidance control is executed. It should be noted that this avoidance control is executed in the preceding vehicle following mode, the automatic speed control mode and the speed limiting mode, in the same manner.

Next, with reference to FIGS. 3 to 5, a plural of traveling courses to be computed by the vehicle control device 100 according to this embodiment will be described. FIGS. 3 to 5 are explanatory diagrams of first to third traveling courses, respectively. In this embodiment, the target traveling course calculation part 10c comprised in the ECU 10 is configured to compute the first to third traveling courses R1 to R3 temporally repeatedly (e.g., at intervals of 0.1 sec). In this embodiment, the ECU 10 is operable, based on information from the sensors and others, to compute a traveling course in a period from a present time through until a given time period (e.g., 3 sec) elapses. The traveling course Rx (where x = 1, 2, 3) is defined by a target position (Px_k) and a target speed (Vx_k) (where k = 0, 1, 2, - - -, n) of the vehicle 1 on the traveling course. Further, at each of the target positions, target values of a plurality of variables (acceleration, acceleration change rate, yaw rate, steering angle, vehicle angle, etc.) are specified in addition to the target speed.

Each of the traveling courses (first to third traveling courses) in FIGS. 3 to 5 is computed based on the shape of a traveling road on which the vehicle 1 is traveling, a traveling trajectory of a preceding vehicle, the traveling behavior of the vehicle 1, and the setup vehicle speed, without taking into account surrounding object detection information regarding an object (an obstacle such as a parked vehicle or a pedestrian) on the traveling road or around the traveling road. Thus, in this embodiment, each of the traveling courses is computed without taking into account the surrounding object detection information, so that it is possible to keep down the overall computational load for calculating these traveling courses.

For the sake of facilitating understanding, the following description will be made based on an example in which each of the traveling courses is computed on the assumption that the vehicle 1 travels on a road 5 consisting of a straight section 5a, a curve section 5b, a straight section 5c. The road 5 comprises left and right lanes 5L, 5R. Assume that, at a present time, the vehicle 1 travels on the lane 5L in the straight section 5a.

(First Traveling Course)

As shown in FIG. 3, the first traveling course R1 is set, by a distance corresponding to a given time period, to allow the vehicle 1 to maintain traveling in the lane 5L serving as the traveling road, in conformity to the shape of the road 5. Specifically, the first traveling course R1 is set, in each of the straight sections 5a, 5c, to allow the vehicle 1 to maintain traveling along approximately the widthwise middle of the lane 5L, and set, in the curve section 5b, to allow the vehicle 1 to travel on an inner side or in-side (on the side of a center O of a curvature radius L of the curve section 5b) with respect to the widthwise middle of the lane 5L.

The target traveling course calculation part 10c is operable to execute the image recognition processing for image data about the surroundings of the vehicle 1, captured by the vehicle exterior camera 20, to detect opposed lane edges 6L, 6R. The opposed lane edges are, e.g., a demarcation line (white road line or the like), and a road shoulder, as mentioned above. Further, the target traveling course calculation part 10c is operable, based on the detected opposed lane edges 6L, 6R, to calculate a lane width W of the lane 5L and the curvature radius L in the curve section 5b. Alternatively, the target traveling course calculation part 10c may be configured to acquire the lane width W and the curvature radius L from the map information of the navigation system 30. Further, the target traveling course calculation part 10c is operable to read, from the image data, a speed limit indicated by a speed sign S or on the road surface. Alternatively, the target traveling course calculation part 10c may be configured to acquire the speed limit from the outside via a wireless communication, as mentioned above.

With regard to the straight sections 5a, 5c, the target traveling course calculation part 10c is operable to set a plurality of target positions P1_k of the first traveling course R1 to allow a vehicle width directional center (e.g., the position of the center of gravity) of the vehicle 1 to pass through the widthwise middle between the opposed lane edges 6L, 6R.

On the other hand, with regard to the curve section 5b, the target traveling course calculation part 10c is operable to maximally set a displacement amount Ws toward the in-side from the widthwise middle position of the lane 5L at a longitudinal middle position P1_c of the curve section 5b. This displacement amount Ws is computed based on the curvature radius L, the lane width W, and a width dimension D of the vehicle 1 (prescribed values stored in the memory of the ECU 10). Then, the target traveling course calculation part 10c is operable to set the plurality of target positions P1_k of the first traveling course R1 in such a manner as to smoothly connect the longitudinal middle position P1_c of the curve section 5b to the widthwise middle position of each of the straight sections 5a, 5b. Here, it should be understood that the first traveling course R1 may also be offset toward the in-side in the straight sections 5a, 5c at positions just before entering the curve section 5b and just after exiting the curve section 5b.

Basically, a target speed V1_k at each of the target positions P1_k of the first traveling course R1 is set to a given setup vehicle speed (constant speed) set by the driver using the vehicle speed setting switch 37b of the driver manipulation unit 35 or preliminarily set by the vehicle control device 100. However, when this setup vehicle speed exceeds a speed limit acquired from a speed sign S or the like, or a speed limit determined according to the curvature radius L of the curve section 5b, the target speed V1_k at each of the target positions P1_k on the traveling course is limited to a lower one of the two speed limits. Further, the target traveling course calculation part 10c is operable to correct the target positions P1_k and the target speed V1_k, according to a current behavior state (i.e., vehicle speed, acceleration, yaw rate, steering angle, lateral acceleration, etc.) of the vehicle 1. For example, when a current value of the vehicle speed is largely different from the setup vehicle speed, the target speed is corrected so as to allow the vehicle speed to come close to the setup vehicle speed.

(Second Traveling Course)

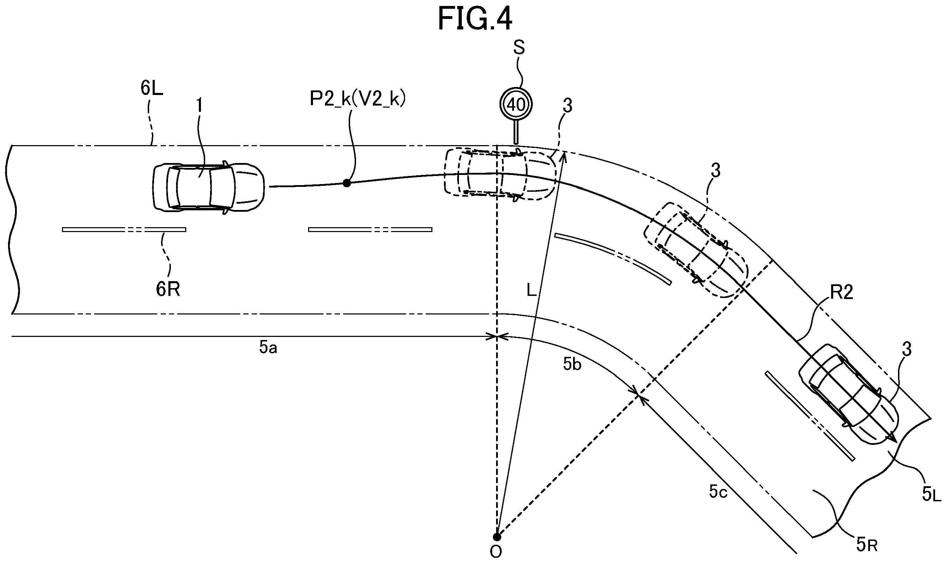

As shown in FIG. 4, the second traveling course R2 is set, by a distance corresponding to a given time period, to allow the vehicle 1 to follow a traveling trajectory of a preceding vehicle 3. The target traveling course calculation part 10c is operable to continuously compute the position and speed of the preceding vehicle 3 in the lane 5L in which the vehicle 1 is traveling, based on the image data from the vehicle exterior camera 20, the measurement data from the millimeter-wave radar 22, and the vehicle speed of the vehicle 1 from the vehicle speed sensor 23, and store the calculated position and speed as preceding vehicle trajectory information, and, based on the preceding vehicle trajectory information, to set the traveling trajectory of the preceding vehicle 3 as the second traveling course R2 (target positions P2_k and target speeds V2_k).

(Third Traveling Course)

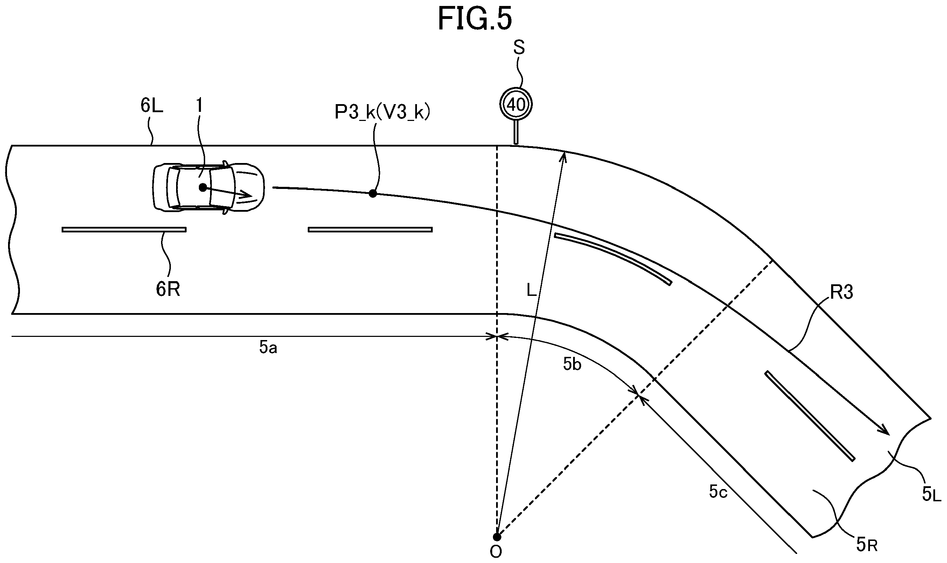

As shown in FIG. 5, the third traveling course R3 is set, by a distance corresponding to a given time period, based on a current driving state of the vehicle 1 by the driver. Specifically, the third traveling course R3 is set based on a position and a speed estimated from a current traveling behavior of the vehicle 1.

The target traveling course calculation part 10c is operable, based on the steering angle, the yaw rate and the lateral acceleration of the vehicle 1, to compute target positions P3_k of the third traveling course R3 having the distance corresponding to the given time period. However, in the situation where the opposed lane edges are detected, the target traveling course calculation part 10c is operable to correct the target positions P3_k such that the computed third traveling course R3 does not come close to or intersect with any of the lane edges.

Further, the target traveling course calculation part 10c is operable, based on current values of the vehicle speed and the acceleration of the vehicle 1, to compute a target speed V3_k of the third traveling course R3 having the distance corresponding to the given time period. Here, when the target speed V3_k exceeds the speed limit acquired from the speed sign S or the like, the target speed V3_k may be corrected in such a manner as to avoid exceeding the speed limit.

Next, a relationship between the driving support modes and the target traveling courses in the vehicle control device 100 will be described. In this embodiment, the vehicle control device 100 is configured such that, when the driver manipulates the driver manipulation unit 35 to select one of the driving support modes, one of the traveling courses is selected, as the target traveling course, according to the selected driving support mode.

When the preceding vehicle following mode is selected in a situation where opposed lane edges are detected, the first traveling course is used as the target traveling course, irrespective of the presence or absence of a preceding vehicle. In this case, the setup vehicle speed set using the vehicle speed setting switch 37b is used as the target speed.

On the other hand, when the preceding vehicle following mode is selected in a situation where no opposed lane edges are detected, but a preceding vehicle is detected, the second traveling course is used as the target traveling course. In this case, the target speed is set according to the vehicle speed of the preceding vehicle. Further, when the preceding vehicle following mode is selected in a situation where neither opposed lane edges nor a preceding vehicle is detected, the third traveling course is used as the target traveling course.

When the automatic speed control mode is selected, the third traveling course is used as the target traveling course. In the automatic speed control mode in which the speed control is automatically executed as mentioned above, the setup speed set through the use of the setting vehicle speed input part 37 is used as the target speed. Further, the driver manually controls steering by manipulating the steering wheel.

When the speed limiting mode is selected, the third traveling course is also used as the target traveling course. In the speed limiting mode in which the speed control is automatically executed as mentioned above, the target speed is set according to the depression amount of the accelerator pedal manipulated by the driver, within the speed limit. Further, the driver manually controls steering by manipulating the steering wheel.

When the basic control mode (off mode) is selected, the third traveling course is used as the target traveling course. The basic control mode is basically the same as the speed limiting mode in a state in which no speed limit is set.

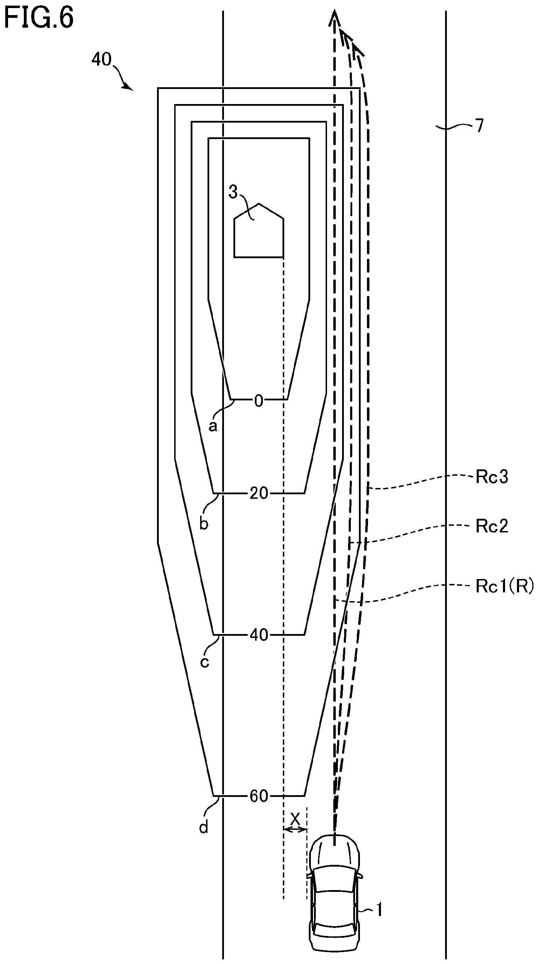

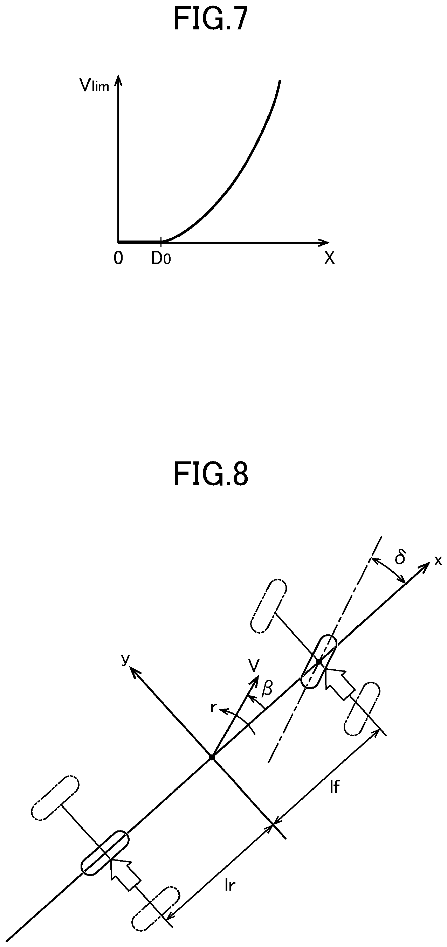

Next, with respect to FIGS. 6 to 8, traveling course correction processing to be executed by the corrected traveling course calculation part 10d of the ECU in the vehicle control device 100 according to this embodiment will be described. FIG. 6 is an explanatory diagram of obstacle avoidance by correction of the target traveling course. FIG. 7 is an explanatory diagram showing a relationship between a permissible upper limit of a pass-by speed and a clearance between an obstacle and an own vehicle during avoidance of the obstacle. FIG. 8 is an explanatory diagram of a vehicle model.

In FIG. 6, the vehicle 1 is traveling on a traveling road (lane) 7, and is just about passing a second vehicle 3 being traveling or parked and overtaking the vehicle 3.

Generally, when passing (or overtaking) an obstacle (e.g., a preceding vehicle, a parked vehicle, or a pedestrian) on or near a road, the driver of the vehicle 1 keeps a given clearance or distance (lateral distance) between the vehicle 1 and the obstacle in a lateral direction orthogonal to a traveling direction of the vehicle 1, and reduces the vehicle speed to a value the driver feels safe. Specifically, in order to avoid dangers such as a situation where a preceding vehicle suddenly changes a course, a situation where a pedestrian comes out from a blind spot due to the obstacle, and a situation where a door of a parked vehicle is suddenly opened, the relative speed with respect to the obstacle is set to a lower value as the clearance becomes smaller.

Further, generally, when the vehicle 1 is approaching a preceding vehicle from behind the preceding vehicle, the driver of the vehicle 1 adjusts the vehicle speed (relative speed) according to an inter-vehicle distance (longitudinal distance) along the travelling direction. Specifically, when the inter-vehicle distance is relatively large, an approaching speed (relative speed) is maintained relatively high. However, when the inter-vehicle distance becomes relatively small, the approaching speed is set to a lower value. Subsequently, at a given inter-vehicle distance, the relative speed between the two vehicles is set to zero. This action is the same even when the preceding vehicle is a parked vehicle.

As above, the driver drives the vehicle 1 in such a manner as to avoid dangers while taking into account a relationship between the distance (including the lateral distance and the longitudinal distance) from the vehicle 1 to an obstacle, and the relative speed therebetween.

Therefore, in this embodiment, as shown in FIG. 6, the vehicle 1 is configured to set a two-dimensional distribution zone (speed distribution zone 40) defining a permissible upper limit of the relative speed in the travelling direction of the vehicle 1 with respect to an obstacle (such as the parked vehicle 3) detected by the vehicle 1, around the obstacle (over lateral, rear and forward regions around the obstacle) or at least between the obstacle and the vehicle 1. In the speed distribution zone 40, the permissible upper limit $V_{lim}$ of the relative speed is set at each point around the obstacle. In this embodiment, in all the driving support modes, traveling course correction processing is executed to prevent the relative speed of the vehicle 1 with respect to the obstacle from exceeding the permissible upper limit $V_{lim}$ in the speed distribution zone 40.

As can be understood from FIG. 6, in the speed distribution zone 40, the permissible upper limit of the relative speed is set such that it becomes smaller as the lateral distance and the longitudinal distance from the obstacle become smaller (as the vehicle 1 approaches the obstacle more closely). In FIG. 6, for the sake of facilitating understanding, four constant relative speed lines each connecting the same permissible upper limits are shown. In this embodiment, the constant relative speed lines a, b, c, d correspond, respectively, to four lines on which the permissible upper limit $V_{lim}$ is 0 km/h, 20 km/h, 40 km/h and 60 km/h. In this embodiment, each of four constant relative speed regions is set to have an approximately rectangular shape. The corrected traveling course calculation part 10d is configured to, when an obstacle (surrounding object) to be avoided is recognized by the input processing part 10a and selected by the target object selection part 10b, set an upper limit line of a permissible relative speed at which the own vehicle is permitted to travel with respect to the obstacle, in the above manner, and then correct the target traveling course calculated by the target traveling course calculation part 10c, in such a manner as to satisfy the upper limit line.

Here, the speed distribution zone 40 does not necessarily have to be set over the entire circumference of the obstacle, but may be set at least in a region rearward of the obstacle and on one (in FIG. 6, right side) of opposite lateral sides of the obstacle on which the vehicle 1 exists.

As shown in FIG. 7, in a situation where the vehicle 1 is traveling at a certain absolute speed, the permissible upper limit $V_{lim}$ set in the lateral direction of the obstacle is kept at 0 (zero) km/h when the clearance X is less than $D_0$ (safe distance), and then quadratically increases when the clearance X becomes equal to or greater than $D_0$ ($V_{lim} = k (X - D_0)^2$, where $X \geq D_0$). That is, when the clearance X is less than $D_0$, the relative speed of the vehicle 1 becomes zero so as to ensure safety. On the other hand, when the clearance X is equal to or greater than $D_0$, the vehicle 1 is permitted to pass the obstacle at a larger relative speed as the clearance becomes larger.

In the example illustrated in FIG. 7, the permissible upper limit $V_{lim}$ in the lateral direction of the obstacle is defined as follows: $V_{lim} = f(X) = k (X - D_0)^2$. In this formula, k denotes a gain coefficient related to the degree of change of $V_{lim}$ with respect to X, and is set depending on a type of obstacle or the like. Similarly, $D_0$ is set depending on a type of obstacle or the like.

In this embodiment, $V_{lim}$ is defined as a quadratic function of X, as mentioned above. Alternatively, $V_{lim}$ may be defined as another function (e.g., a linear function). Further, the permissible upper limit $V_{lim}$ has been described based on an example in which it is set in a region laterally outward of the obstacle, with reference to FIG. 7, it can be set in the remaining region in all radial directions of the obstacle including the longitudinal direction, in the same manner. In such a case, the coefficient k and the safe distance $D_0$ may be set depending on a direction from the obstacle.

The speed distribution zone 40 can be set based on various parameters. Examples of the parameter may include the relative speed between the vehicle 1 and an obstacle, the type of obstacle, the traveling direction of the vehicle 1, a moving direction and a moving speed of the obstacle, the length of the obstacle, and the absolute speed of the vehicle 1. That is, based on these parameters, the coefficient k and the safe distance $D_0$ can be selected.

In this embodiment, the obstacle includes a vehicle, a pedestrian, a bicycle, a cliff, a trench, a hole and a fallen object. The vehicle can be classified into a passenger vehicle, a truck, and a motorcycle. The pedestrian can be classified into an adult, a child and a group.

As shown in FIG. 6, when the vehicle 1 is traveling on the traveling road 7, the input processing part 10a comprised in the ECU 10 of the vehicle 1 operates to detect an obstacle (parked vehicle 3) based on the image data from the vehicle exterior camera 20. At this moment, the type of obstacle (in this example, a vehicle or a pedestrian) is identified.

Further, the input processing part 10a operates to calculate the position and the relative speed of the obstacle (parked vehicle 3) with respect to the vehicle 1, and the absolute speed of the obstacle, based on the measurement data from the millimeter-wave radar 22 and vehicle speed data from the vehicle speed sensor 23. Here, the position of the obstacle includes an x-directional position (longitudinal distance) along the traveling direction of the vehicle 1, and a y-directional position (lateral distance) along the lateral direction orthogonal to the traveling direction.

The corrected traveling course calculation part 10d comprised in the ECU 10 operates to set the speed distribution zone 40 with respect to each of one or more detected obstacles (in FIG. 6, the parked vehicle 3). Then, the corrected traveling course calculation part 10d operates to correct a traveling course to prevent the vehicle speed (relative speed) of the vehicle 1 from exceeding the permissible upper limit $V_{lim}$ in the speed distribution zone 40. That is, along with avoidance of the obstacle, the corrected traveling course calculation part 10d operates to correct the target traveling course determined according to the driving support mode selected by the driver.

Specifically, in a situation where, if the vehicle 1 travels along the target traveling course, the target speed exceeds, at a certain target position, the permissible upper limit defined in the speed distribution zone 40, the target speed is reduced without changing the target position (course Rc1 in FIG. 6), or the target position is changed to a point on a bypass course so as to allow the target speed to avoid exceeding the permissible upper limit (course Rc3 in FIG. 6) or both the target position and the target speed are changed (course Rc2 in FIG. 6).

For example, FIG. 6 shows a case where the computed target traveling course R is a course which is set such that the vehicle 1 travels along a widthwise middle position of the traveling road 7 (target position) at 60 km/h (target speed). In this case, the parked vehicle 3 as the obstacle exists ahead of the vehicle 1. However, in the stage of computing the target traveling course R, this obstacle is not taken into account to reduce the computational load, as mentioned above.

If the vehicle 1 travels along the target traveling course R, it will cut across the constant relative speed lines d, c, c, d in the speed distribution zone 40, in this order. That is, the vehicle 1 traveling at 60 km/h enters a region inside the constant relative speed line d (permissible upper limit $V_{lim}$ = 60 km/h). Thus, the corrected traveling course calculation part 10d operates to correct the target traveling course R so as to restrict the target speed at each target position of the target traveling course R to the permissible upper limit $V_{lim}$ or less, thereby generating the post-correction target traveling course (corrected traveling course candidate) Rc1. Specifically, in the post-correction target traveling course Rc1, as the vehicle 1 approaches the parked vehicle 3, the target speed is reduced to become equal to or less than the permissible upper limit $V_{lim}$ at each target position, i.e., gradually reduced to less than 40 km/h, and then, as the vehicle 1 travels away from the parked vehicle 3, the target speed is gradually increased to 60 km/h as the original vehicle speed.

The post-correction target traveling course (corrected traveling course candidate) Rc3 is a course which is set such that the vehicle 1 travels outside the constant relative speed line d (which corresponds to a relative speed of 60 km/h), instead of changing the target speed (60 km/h) of the target traveling course R. In this case, the corrected traveling course calculation part 10d operates to correct the target traveling course R such that the target position is changed to a point on or outside the constant relative speed line d, while maintain the target speed of the target traveling course R, thereby generating the post-correction target traveling course Rc3. Thus, the target speed of the post-correction target traveling course Rc3 is maintained at 60 km/h as the target speed of the target traveling course R.

The post-correction target traveling course (corrected traveling course candidate) Rc2 is a course set by changing both the target position and the target speed of the target traveling course R. In the post-correction target traveling course Rc2, instead of maintaining the target speed at 60 km/h, the target speed is gradually reduced as the vehicle 1 approaches the parked vehicle 3, and then gradually increased to 60 km/h as the original vehicle speed, as the vehicle 1 travels away from the parked vehicle 3.

The correction to be achieved by changing only the target speed without changing the target position of the target traveling course R, as in the post-correction target traveling course Rc1, can be applied to a driving support mode which involves the speed control but does not involve the steering control (e.g., the automatic speed control mode, the speed limiting mode, and the basic control mode).

Further, the correction to be achieved by changing only the target position without changing the target speed of the target traveling course R, as in the post-correction target traveling course Rc3, can be applied to a driving support mode which involves the steering control (e.g., the preceding vehicle following mode).

Further, the correction to be achieved by changing both the target position and the target speed of the target traveling course R, as in the post-correction target traveling course Rc2, can be applied to a driving support mode which involves the speed control and the steering control (e.g., the preceding vehicle following mode).

Subsequently, the corrected traveling course calculation part 10d comprised in the ECU 10 operates to determine an optimal corrected traveling course from among the corrected traveling course candidates settable as a corrected traveling course, based on sensor information and others. Specifically, the corrected traveling course calculation part 10d operates to determine an optimal corrected traveling course from among the corrected traveling course candidates, based on the given evaluation function and the given limiting condition.

The ECU10 stores the evaluation function J, the limiting condition and a vehicle model in the memory. For determining an optimal corrected traveling course, the corrected traveling course calculation part 10d is operable to calculate, as the optimal corrected traveling course, one of the corrected traveling course candidates, which has an extreme value in terms of the evaluation function J, while satisfying the limiting condition and the vehicle model (optimization processing).

The evaluation function J has a plurality of evaluation factors. In this embodiment, the evaluation factors are a function for evaluating the adequacy of a plurality of corrected traveling course candidates obtained by correcting the target traveling course, in terms of, e.g., speed (longitudinal and lateral speeds), acceleration (longitudinal and lateral accelerations), acceleration change rate (longitudinal and lateral acceleration change rates), yaw rate, lateral offset with respect to the widthwise middle of a lane, vehicle angle, steering angle, and other software limitations.

The evaluation factors include an evaluation factor regarding a longitudinal behavior of the vehicle 1 (longitudinal evaluation factor: longitudinal speed, longitudinal acceleration, longitudinal acceleration rate, etc.), and an evaluation factor regarding a lateral behavior of the vehicle 1 (lateral evaluation factor: lateral speed, lateral acceleration, lateral acceleration rate, yaw rate, lateral offset with respect to the widthwise middle of a lane, vehicle angle, steering angle, etc.).

In this embodiment, the evaluation function J is expressed as the following formula:

$$J = \sum_{0}^{N} \left\{ W_1 \left( X_1 - X_{ref1} \right)^2 + W_2 \left( X_2 - X_{ref2} \right)^2 + \cdots + W_n \left( X_n - X_{refn} \right)^2 \right\}$$

In this formula, Wk (Xk - Xrefk)$^2$ denotes each of the evaluation factors, wherein: Xk denotes a physical value of the corrected traveling course candidate in regard to each of the evaluation factors; Xrefk denotes a physical value of the target traveling course (before correction) in regard to a corresponding one of the evaluation factors; and Wk denotes a weighting factor for the corresponding one of the evaluation factors (e.g., $0 \leq Wk \leq 1$) (where k is an integer of 1 to n). Thus, in this embodiment, the evaluation function J is equivalent to a value obtained by: calculating differences in respective physical amounts of n evaluation factors between a corrected traveling course candidate and a target traveling course (before correction); weighting respective square values of the differences; and summing the weighted values over a traveling course distance corresponding to a given time period N (e.g., N = 3 sec).

In this embodiment, the evaluation function J has a smaller value as a corrected traveling course candidate obtained by correcting the target traveling course has a higher evaluation. That is, among the plurality of corrected traveling course candidates, one corrected traveling course candidate having a minimum value in terms of the evaluation function J is calculated as an optimal corrected traveling course by the corrected traveling course calculation part 10d.

The limiting condition is a condition to be satisfied by each of the corrected traveling course candidates. Thus, the corrected traveling course candidates to be evaluated can be narrowed down by the limiting condition, so that it is possible to reduce a computational load necessary for the optimization processing based on the evaluation function J, thereby shortening a computational time period.

The vehicle model is designed to define physical motions of the vehicle 1, and expressed as the following motion equations. In this embodiment, this vehicle model is a two-wheel vehicle model as shown in FIG. 8. The physical motions of the vehicle 1 can be defined by the vehicle model, so that it is possible to calculate a corrected traveling course which is less likely to give a driver a feeling of strangeness during traveling, and early converge the optimization processing based on the evaluation function J.

$$mV\left(\frac{d\beta}{dt} + r\right) = -2K_f\left(\beta + \frac{l_f}{V}r - \delta\right) - 2K_r\left(\beta - \frac{l_r}{V}r\right) \qquad (1)$$

$$I\frac{dr}{dt} = -2K_f\left(\beta + \frac{l_f}{V}r - \delta\right)l_f + 2K_r\left(\beta - \frac{l_r}{V}r\right)l_r \qquad (2)$$

In FIG. 8 and the equations (1) and (2), m denotes a mass of the vehicle 1; I denotes a yawing inertia moment of the vehicle 1; I denotes a wheelbase of the vehicle 1; $l_f$ denotes a distance between a center-of-gravity and a front axle of the vehicle 1; $l_r$ denotes a distance between the center-of-gravity and a rear axle of the vehicle 1; $K_f$ denotes a cornering power per front road wheel of the vehicle 1; $K_r$ denotes a cornering power per rear road wheel of the vehicle 1; V denotes a vehicle speed of the vehicle 1; δ denotes an actual steering angle of a front road wheel of the vehicle 1 ; β denotes a lateral slip angle at the center-of-gravity; r denotes a yaw angular speed of the vehicle 1; θ denotes a yaw angle of the vehicle 1; y denotes a lateral displacement with respect to an absolute space; and t denotes time.

In this way, the corrected traveling course calculation part 10d is operable, based on the target traveling course, the limiting condition, the vehicle model, etc., to calculate an optimal corrected traveling course which is the smallest in terms of the evaluation function J, from among the plurality of corrected traveling course candidates.

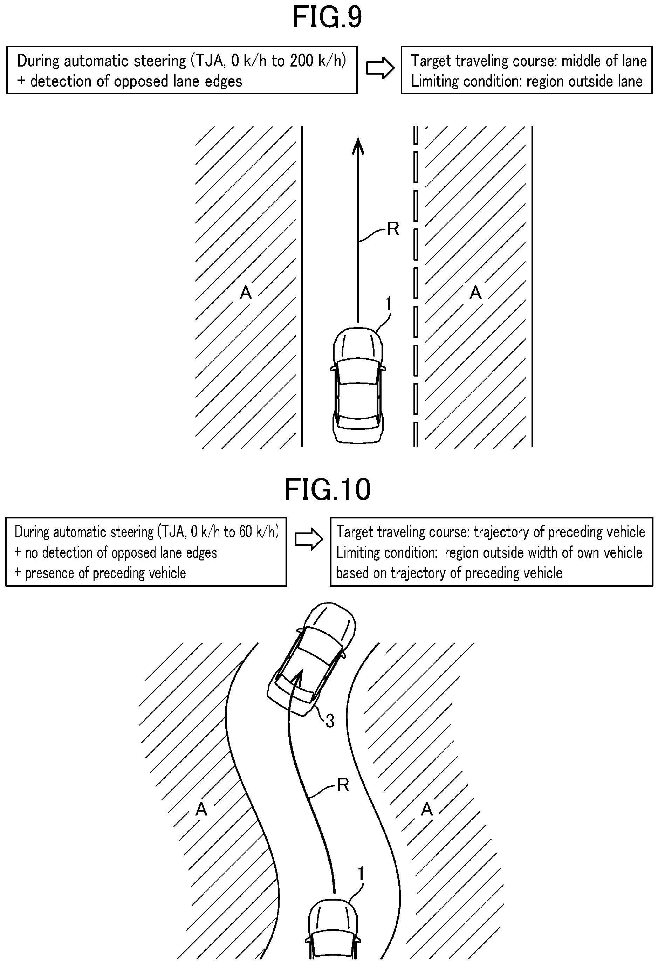

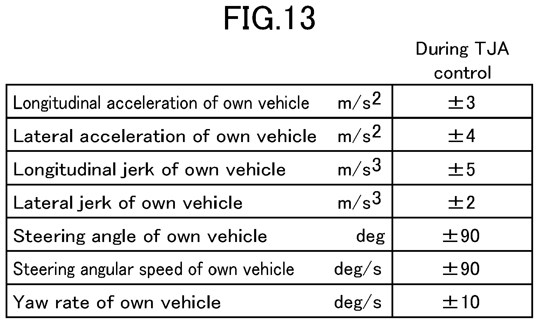

Next, with reference to FIGS. 9 to 13, the limiting condition on the corrected traveling course candidates will be described. FIGS. 9 to 12 are diagrams showing examples of the limiting condition on traveling course to be satisfied by the corrected traveling course candidates. FIG. 13 is a table showing the limiting condition on traveling parameters to be satisfied by the corrected traveling course candidates.

By the corrected traveling course calculation part 10d, the target traveling course calculated by the target traveling course calculation part 10c is corrected, and one corrected traveling course is calculated, based on an upper limit line (FIG. 6) of the permissible relative speed at which the own vehicle is permitted to travel with respect to a surrounding object, the evaluation function J, and the limiting condition described in detail later. That is, among a plurality of corrected traveling course candidates modified in such a manner as to avoid cutting across the upper limit line of the permissible relative speed of the own vehicle with respect to a surrounding object, one corrected traveling course candidate satisfying the limiting condition and having the smallest value in terms of the evaluation function is calculated as an optimal corrected traveling course.

For example, as shown in FIG. 9, when the preceding vehicle following mode as an automatic steering mode is in execution, and a lane is detected by the vehicle exterior camera 20, the target traveling course calculation part 10c operates to set the target traveling course R at the middle between the demarcation lines defining the opposed lane edges, and the corrected traveling course calculation part 10d operates to set, as the limiting condition, the detected lane (a region A outside the demarcation lines defining the opposed lane edges (shaded region in FIG. 9)). That is, as long as a lane is detected, even during execution of the preceding vehicle following mode, the target traveling course R is set at the widthwise middle of the lane, and the limiting condition is set to be the region A outside the lane. By setting the limiting condition in this manner, the corrected traveling course calculation part 10d is operable to correct the target traveling course R without causing the vehicle 1 to enter the region A.

On the other hand, as shown in FIG. 10, when, in the preceding vehicle following mode, no lane is detected, but a preceding vehicle is detected, a traveling trajectory of the preceding vehicle 3 is set as the target traveling course R. Further, a region A outside the width of the own vehicle 1 whose middle is coincident with an estimated traveling course when the own vehicle 1 travels along the target traveling course R (the traveling trajectory of the preceding vehicle 3) is set as the limiting condition. Thus, the outside of a region through which the own vehicle 1 passes when the own vehicle 1 travels along the same course as the traveling trajectory of the preceding vehicle 3 is set as the limiting condition. By setting the limiting condition in this manner, the corrected traveling course calculation part 10d is operable to correct the target traveling course R without causing the vehicle 1 to enter the region A.

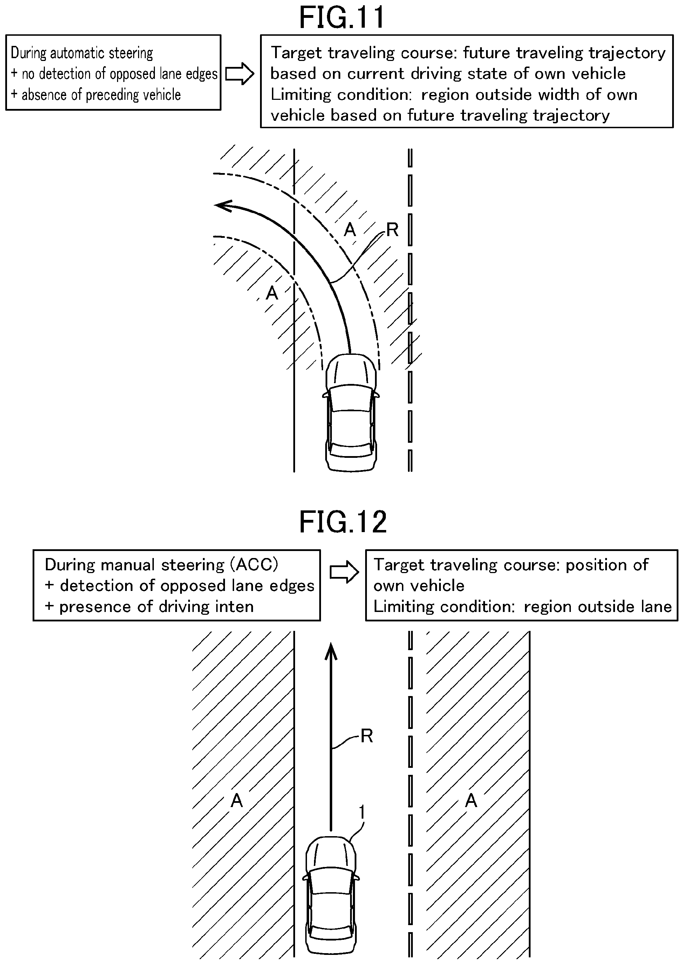

Further, as shown in FIG. 11, when, in the preceding vehicle following mode, neither a lane nor a preceding vehicle is detected, an estimated traveling course along which the vehicle 1 is estimated to travel when a current driving state based on the intent of the driver is continued is set as the target traveling course R, and a region A outside the width of the vehicle 1 whose middle is coincident with the estimated traveling course is set as the limiting condition. That is, when no preceding vehicle is detected, the target traveling course calculation part 10c operates to set the limiting condition on the basis of the target traveling course R calculated by the target traveling course calculation part 10c. By setting the limiting condition in this manner, the corrected traveling course calculation part 10d is operable to correct the target traveling course R without causing the vehicle 1 to enter the region A.

Further, as shown in FIG. 12, when a lane is detected in any control mode other than the preceding vehicle following mode, an estimated traveling course along which the vehicle 1 is estimated to travel when a current driving state based on the intent of the driver is continued is set as the target traveling course R. In the example illustrated in FIG. 12, the vehicle 1 travels based on the intent of the driver, in a lane at a position close to a left demarcation line with respect to a widthwise middle of the lane, and it is assumed that, if this driving state is continued, the vehicle 1 keeps traveling at the position close to the left demarcation line. Therefore, the position close to the left demarcation line with respect to the widthwise middle of the lane, i.e., an estimated traveling course, is set as the target traveling course R. Further, a region A, i.e., a region outside the width of the vehicle 1 whose middle is coincident with this estimated traveling course, or a region outside demarcation lines defining the opposed lane edges, is set as the limiting condition. By setting the limiting condition in this manner, the corrected traveling course calculation part 10d is operable to correct the target traveling course R without causing the vehicle 1 to enter the region A.

Next, with reference to FIG. 13, the limiting condition on traveling parameter to be satisfied by the corrected traveling course candidates will be described.

As mentioned above, the target traveling course calculation part 10c of the ECU 10 operates to calculate the target traveling course R, and the corrected traveling course calculation part 10d operates to correct the target traveling course R in such a manner as to satisfy a corresponding one of the limiting conditions (FIGS. 9 to 12), as mentioned above. Further, the corrected traveling course calculation part 10d operates to correct the target traveling course R in such a manner as to additionally satisfy limiting values of traveling parameters as shown in FIG. 13. Specifically, although a corrected traveling course candidate satisfies a corresponding one of the limiting conditions illustrated in FIGS. 9 to 12, the corrected traveling course candidate cannot be adopted, if it is impractical in terms of motion performance of the vehicle 1, or it gives a passenger of the vehicle 1 a feeling of discomfort. Therefore, in this embodiment, the limiting condition is also set on traveling parameters regarding motions of the own vehicle, such as acceleration of the own vehicle.

Specifically, in this embodiment, as shown in FIG. 13, in the preceding vehicle following mode (TJA), the longitudinal acceleration of the own vehicle is limited within $\pm 3$ m/s$^2$; the lateral acceleration of the own vehicle is limited within $\pm 4$ m/s$^2$; the longitudinal jerk of own vehicle is limited within $\pm 5$ m/s$^3$; the lateral jerk of own vehicle is limited within $\pm 2$ m/s$^3$; the steering angle of the own vehicle is limited within $\pm 90$ deg; the steering angular speed of the own vehicle is limited within $\pm 90$ deg/s; and the yaw rate of the own vehicle is limited within $\pm 10$ deg/s. As above, in the preceding vehicle following mode as an automatic steering mode, the limiting condition is given as the absolute values of traveling parameters. Thus, by providing the limiting condition on traveling parameter in this manner, it is possible to prevent a situation where a large G (acceleration) is applied to a passenger of the vehicle 1 to give the passenger a feeling of discomfort.

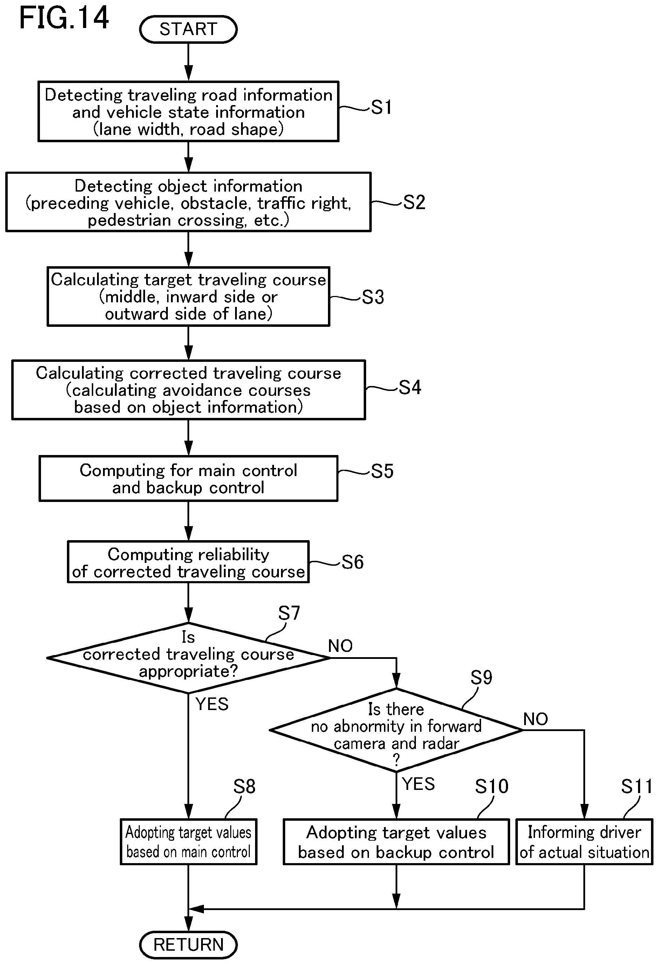

Next, with reference to FIG. 14, a process of computing the target steering angle and the target acceleration/deceleration by the ECU 10 will be described. FIG. 14 is a flowchart showing a process of computing the target steering angle and the target acceleration/deceleration by the ECU 10, based on input information from the vehicle exterior camera 20 and other sensors. A processing routine according to the flowchart in FIG. 14 is repeatedly executed at intervals of a given time period, during execution of the driving support control. In this embodiment, the processing routine of the flowchart in FIG. 14 is executed every about 0.1 seconds as a time interval at which the target traveling course and the corrected traveling course are updated.

First of all, in step S1 illustrated in FIG. 14, information regarding a traveling road on which the vehicle 1 is traveling and information regarding a vehicle state of the vehicle 1 are detected, based on input information from the vehicle exterior camera 20 and other sensors. The processing at the step S1 is mainly executed by the input processing part 10a of the ECU 10. As the information regarding the traveling road, information regarding the shape of the traveling road, such as the width of a lane in which the vehicle 1 is traveling, and identification of whether the traveling road is straight or curved, is detected mainly from an image captured by the vehicle exterior camera 20. Further, as the information regarding the vehicle state, a current value of the vehicle speed measured by the vehicle speed sensor 23, a current value of the steering angle measured by the steering angle sensor 26, a current value of the accelerator pedal depression amount measured by the accelerator sensor 27 and others are detected.

Subsequently, in step S2, information regarding objects existing around the vehicle 1 is detected (recognized), based on input information mainly from the millimeter-wave radar 22 and the vehicle exterior camera 20. In this embodiment, the objects to be detected in the step S2 are any objects, such as a preceding vehicle, a pedestrian, an obstacle, a traffic right, a traffic sign or pedestrian crossing, existing in a range reachable by the vehicle 1 before elapse of about 3 seconds within which the target traveling course is generated. The object detection processing at the step S2 is also mainly executed by the input processing part 10a of the ECU 10.

In the step S2, among the detected surrounding objects, target objects necessary to calculate a traveling course are selected. This processing of selecting the target objects from the surrounding objects is executed mainly by the target object selection part 10b of the ECU 10.

When there is no input of detection signals from the vehicle exterior camera 20 and other sensors connected to the ECU 10, or when there is no consistency among detection signals from two or more sensors including the vehicle exterior camera 20, the input processing part 10a operates to presume that there is an abnormality in any of the sensors. For example, when an object located at a position where it must be detected by the forward radar and the lateral radar each comprised in the millimeter-wave radar 22 is detected by only one of the forward and lateral radars, or when, even though the presence of an obstacle is detected based on an image from the vehicle exterior camera 20, no corresponding object is detected by the millimeter-wave radar 22, it can be presumed that there is an abnormality in any of the sensors including the vehicle exterior camera 20.

Subsequently, in step S3, a target traveling course (FIGS. 3 to 5) is calculated based on the traveling road information and the vehicle state information detected in the step S1, and information regarding the target objects detected and selected in the step S2. The calculation of the target traveling course in the step S3 is executed mainly by the target traveling course calculation part 10c of the ECU 10. As mentioned above, the target traveling course is a traveling course set according to a selected one of the driving support modes, wherein the calculation of the target traveling course is performed without taking into account a preceding vehicle, a pedestrian, an obstacle and the like selected by the target object selection part 10b. However, in this embodiment, when the target object is a traffic sign or a pedestrian crossing, these target objects are taken into account for the calculation of the target traveling course. Specifically, in a situation where the vehicle 1 approaches a red traffic signal or a pedestrian crossing, the target traveling course may be calculated to cause a traveling speed (vehicle speed) of the vehicle 1 to be reduced.

Subsequently, in step S4, the target traveling course calculated in the step S3 is corrected based on information regarding the target objects detected and selected in the step S2, to calculate a corrected traveling course. The calculation of the corrected traveling course in the step S4 is executed mainly by the corrected traveling course calculation part 10d of the ECU 10. Here, when no obstacle or the like to be avoided exists on the target traveling course, the correction of the target traveling course is not performed, i.e., the corrected traveling course becomes identical to the target traveling course.

On the other hand, when an object to be avoided, such as an obstacle, exists on the target traveling course, the upper limit line of the permissible relative speed at which the vehicle 1 is permitted to travel with respect to the object is set (FIG. 6) so as to avoid collision with the object. Then, the corrected traveling course calculation part 10d operates to generate a plurality of corrected traveling course candidates (e.g., Rc1 to Rc3 in FIG. 6) in such a manner as to avoid cutting across the upper limit line of the permissible relative speed, and exclude a part of the corrected traveling course candidates failing to satisfy the given limiting condition (e.g., FIGS. 9 to 13). Then, the evaluation function J is computed with respect to each of the remaining non-excluded corrected traveling course candidates, and one of the non-excluded corrected traveling course candidates corresponding to an extreme value (minimum value) in terms of the evaluation function J is calculated as the corrected traveling course.

In a case where the target traveling course is complicated, or in a case where there are a plurality of obstacles, or in a case where there are many corrected traveling course candidates each of which should be subjected to computation of the evaluation function J, the computational load becomes larger. When the corrected traveling course cannot be calculated within a given time period due to an excessively large computational load, the processing of calculating the corrected traveling course in the step S4 is cut off midway. In this embodiment, the corrected traveling course calculation processing in the step S4 is cut off when the computation cannot be completed within a given time limit set to 0.1 sec or less which is a time period during which one cycle of the flowchart in FIG. 14 is executed.

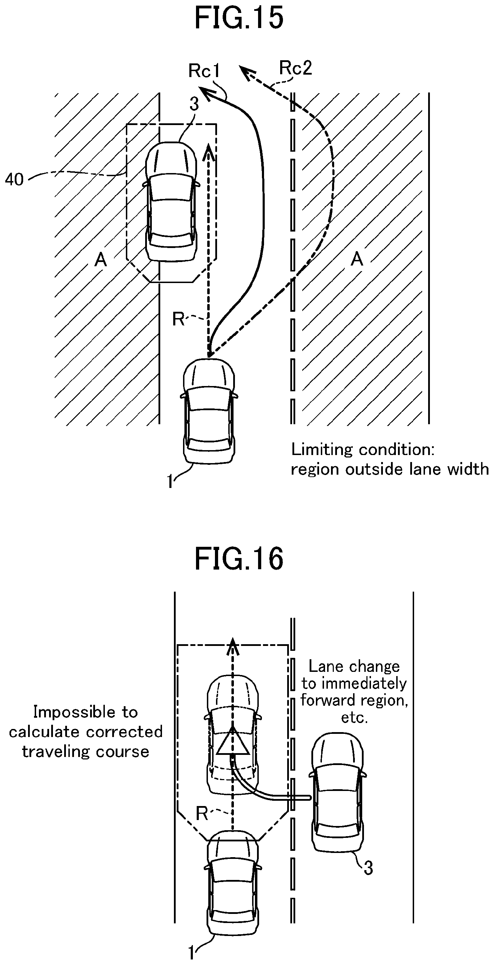

Further, as shown in FIG. 15, in a situation where there is no corrected traveling course candidate satisfying the given limiting condition, among a plurality of corrected traveling course candidates generated in such a manner as to avoid cutting across the upper limit line of the permissible relative speed, no corrected traveling course is calculated in the step S4. Specifically, in the example illustrated in FIG. 15, the target traveling course of the own vehicle 1 is set at the widthwise middle of a lane in which the own vehicle 1 is traveling. However, the target traveling course has to be corrected because a second vehicle 3 is parked ahead of the own vehicle 1, and the own vehicle 1 will collide with the parked vehicle 3 if it travels on the target traveling course without any change.

Here, the speed distribution zone 40 illustrated in FIG. 15 is defined by a line (upper limit line of the permissible relative speed) on which the upper limit of the permissible relative speed is zero. Thus, no matter how much the vehicle speed is reduced, any corrected traveling course candidate causing the own vehicle 1 to enter inside the speed distribution zone 40 is not permitted. Therefore, the corrected traveling course calculation part 10d operates to calculate a corrected traveling course candidate such that the own vehicle 1 does not enter inside the speed distribution zone 40. However, if such a corrected traveling course candidate free from entering the speed distribution zone 40 is taken, the own vehicle 1 will enter a region A restricted from entering by the limiting condition. In this case, it is impossible to calculate any corrected traveling course satisfying the limiting condition.

Further, as in the example illustrated in FIG. 16, there is a case where calculation of the corrected traveling course becomes impossible due to the traveling behavior of a surrounding vehicle. FIG. 16 shows an example in which, when the own vehicle 1 is traveling on the target traveling course (the corrected traveling course is identical thereto because there is no obstacle or the like to be avoided), a surrounding vehicle 3 suddenly makes a lane change and enters immediately ahead of the own vehicle 1, and the own vehicle 1 approaches the vehicle 3. In this situation, due to the traveling behavior of the surrounding vehicle 3, the own vehicle 1 is likely to incidentally enter inside the upper limit line of the permissible relative speed thereof with respect to the surrounding vehicle 3. For example, even though the relative speed between the own vehicle 1 and the surrounding vehicle 3 made a lane change to a region immediately forward of the own vehicle 1 is 20 km/h, a front end of the own vehicle 1 is likely to enter inside a permissible relative speed line of 20 km/h. The corrected traveling course derivation part 10d is configured to calculate the corrected traveling course such that the own vehicle 1 does not enter inside the upper limit line of the permissible relative speed. However, if, due to traveling of a surrounding vehicle, the own vehicle 1 incidentally enters a region which does not satisfy the upper limit of the relative speed, it becomes impossible to calculate the corrected traveling course at this time point.

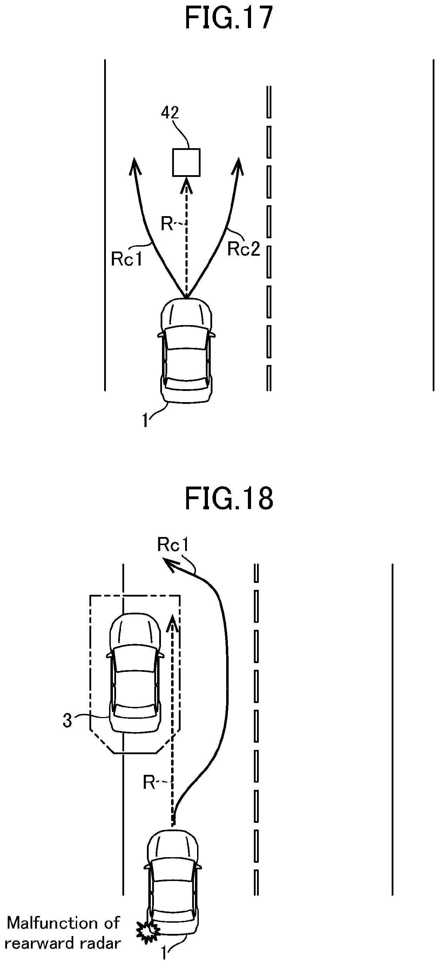

Further, as in the example illustrated in FIG. 17, when the evaluation function J has a plurality of extreme values, calculation of the corrected traveling course is likely to become difficult. In the example illustrated in FIG. 17, there is an obstacle 42 at the approximate widthwise middle of a lane in which the own vehicle 1 is traveling, and the own vehicle 1 can selectively pass one of the right side and the left side of the obstacle 42, so as to avoid the obstacle 42. In this situation, the evaluation function J has two extreme values (minimum values): one corresponding to a corrected traveling course candidate passing the right side of the obstacle 42; and the other corresponding to a corrected traveling course candidate passing the left side of the obstacle 42. In such a case, if the two extreme values are identical, it becomes difficult to calculate one most appropriate corrected traveling course. Further, when the evaluation function J has two or more extreme values, there is a possibility that a corrected traveling course candidate cannot be appropriately evaluated by the evaluation candidate J.

Subsequently, in step S5, the target steering angle and the target acceleration/deceleration are computed by the main control part 10f and the backup control part 10e of the ECU 10. Specifically, the main control part 10f operates to calculate the target steering angle and the target acceleration/deceleration appropriate for traveling on the corrected traveling course calculated in the step S4. On the other hand, the backup control part 10e operates to calculate the target steering angle and the target acceleration/deceleration appropriate for traveling on the target traveling course calculated in the step S3. Here, in a situation where an obstacle or the like to be avoided exists on the target traveling course, the backup control part 10e operates to change the the target acceleration/deceleration (decelerate) so as to avoid collision with the obstacle. Further, the backup control part 10e may be configured to calculate the target acceleration/deceleration so as to avoid a situation where the own vehicle traveling on the target traveling course enters a region which does not satisfy the upper limit of the relative speed thereof with respect to an obstacle (surrounding object). However, it should be noted here that the backup control part 10e is configured to calculate the target steering angle only for the purpose of traveling along the target traveling course, without changing the target steering angle in order to avoid collision with an obstacle.

In the flowchart illustrated in FIG. 14, the target traveling course is calculated in the step S3, and then the corrected traveling course is calculated in the Step S4, whereafter the target steering angle and the target acceleration/deceleration appropriate for each of the target traveling course and the corrected traveling course are calculated in the Step S5. Alternatively, a part or the entirety of these processings may be performed in parallel by one or more CPU. Further, the sequence of these processings may be appropriately interchanged.

Subsequently, in step S6, reliability of the corrected traveling course is computed. When, in the step S2, it is presumed that there is an abnormality in the vehicle exterior camera 20 or any of other sensors or the like as mentioned above, reliability of the calculated corrected traveling course can be considered to be low. Further, when, in the step S4, the computation for calculating the corrected traveling course cannot be completed within a given time limit and cut off midway, reliability of the calculated corrected traveling course can also be considered to be low. Further, when, in the step S4, there is no corrected traveling course candidate satisfying the given limiting condition, among a plurality of corrected traveling course candidates generated in such a manner as to avoid cutting across the upper limit line of the permissible relative speed, reliability of the corrected traveling course can be considered to be low.

Further, in this embodiment, when the evaluation function J computed in the step S4 has a plurality of extreme values, it is also evaluated that reliability of the corrected traveling course is low. However, in a case where, even though the evaluation function J has a plurality of extreme values, a most highly evaluated one of the extreme values has an evaluation value higher than those of the remaining extreme values by a given value or more, one of a plurality of corrected traveling course candidates corresponding to the most highly evaluated extreme value may be determined as a highly reliable corrected traveling course. That is, in a case where, even though the evaluation function J has a plurality of extreme values, the smallest one of the extreme values is enormously small, and less than the second-smallest extreme value by a given value or more, one of a plurality of corrected traveling course candidates corresponding to the smallest extreme value may be determined as a highly reliable corrected traveling course. Conversely, in a case where a most highly evaluated extreme value has a relatively low evaluation value less than a given reference evaluation value, even when the number of extreme values is one, a corrected traveling course candidate corresponding to such an extreme value may be determined as a low reliable corrected traveling course. That is, even when the number of extreme values of the evaluation function J is one, in a case where the absolute value of the extreme value of the evaluation function J is relatively large (the evaluation value is relatively low), a corrected traveling course candidate corresponding to such an extreme value may be determined as a low reliable corrected traveling course.

Subsequently, in step S7, it is determined whether or not the corrected traveling course calculated in the step S4 is highly reliable and appropriate. When the corrected traveling course is determined to be appropriate, the routine proceeds to step S8. On the other hand, when the corrected traveling course is determined to be inappropriate, the routine proceeds to step S9. In the step S8, the target steering angle and the target acceleration/deceleration appropriate for traveling on the corrected traveling course, calculated by the main control part 10f, is output as a control signal from the ECU 10, and then one cycle of the processing routine illustrated in the flowchart of FIG. 14 is completed.

In the present invention, when it is presumed that there is an abnormality in the vehicle exterior camera 20 or any of other sensors or the like, or when the computation is cut off midway, or when there is no corrected traveling course satisfying the limiting condition, the corrected traveling course is determined to be inappropriate. Alternatively, the vehicle control device of the present invention may be configured such that the level of abnormality of the sensor or the like, the value of the evaluation function J of each corrected traveling course candidate calculated until the computation is cut off, the level of deviation from the limiting condition, or the like, is graded based on a score, and it is determined, according to this score, whether or not the corrected traveling course is appropriate.

In the step S9 to which the routine proceeds when the corrected traveling course is determined in the step S7 to be inappropriate, it is determined whether or not there is an abnormality in the forward radar of the millimeter-wave radar 22 or the vehicle exterior camera 20. When it is determined that there is no abnormality in the forward radar and the vehicle exterior camera 20, the routine proceeds to step S10. In the step S10, the target steering angle and the target acceleration/deceleration appropriate for traveling on the target traveling course, calculated by the backup control part 10e, is output as a control signal from the ECU 10, and then one cycle of the processing routine illustrated in the flowchart of FIG. 14 is completed.

As above, when it is presumed that there is an abnormality in ant of other sensors even in a situation where there is no abnormality in the forward radar and the vehicle exterior camera 20, the target steering angle and the target acceleration/deceleration appropriate for traveling on the corrected traveling course, calculated by the main control part 10f, are not adopted. It is because, referring to FIG. 18 showing one example, even in a situation where there is no abnormality in the forward radar of the millimeter-wave radar 22 and the vehicle exterior camera 20, and the corrected traveling course is calculated, if the rearward radar is in a failed state, it is impossible to sufficiently check safety when the own vehicle 1 traveling in a lane avoids a parked vehicle 3 ahead thereof and then returned to an original position in the lane.

On the other hand, when, in the step S9, it is presumed that there is an abnormality in the forward radar or the vehicle exterior camera 20, the routine proceeds to step S11. In the step S11, the output adjustment part 10g operates to inform the driver of the situation where, due to an abnormality in any of the sensors, it is impossible to perform control by the main control part 10f and the backup control part 10e, and then one cycle of the processing routine illustrated in the flowchart of FIG. 14 is completed. That is, when it is presumed that there is an abnormality in the forward radar or the vehicle exterior camera 20, reliability of the calculated target traveling course is not sufficient, so that control by the backup control part 10e is also not executed

In the vehicle control device 100 according to this embodiment, the main control part 10f operates to compute the target steering angle and the target acceleration/deceleration appropriate for traveling on the corrected traveling course (FIG. 6) obtained by correcting the target traveling course (FIGS. 3 to 5), so that it is possible to reduce a computational load on the vehicle control device 100. Further, when the corrected traveling course calculation part 10d fails to calculate any corrected traveling course satisfying the limiting condition (FIGS. 9 to 13) (FIG. 15), the output adjustment part 10g operates to output, as the control signal, the target steering angle and the target acceleration/deceleration calculated by the backup control part 10e. Thus, even in the situation where no corrected traveling course satisfying the limiting condition is obtained, it is possible to allow the own vehicle to travel on the target traveling course, based on the target steering angle and the target acceleration/deceleration calculated by the backup control part 10e. This makes it possible to reduce a feeling of strangeness to be given to the driver.

In the vehicle control device 100 according to this embodiment, the limiting condition is set in a region outside a lane in which the own vehicle 1 is traveling (FIG. 9), so that it is possible to avoid a situation where the corrected traveling course is calculated to pass through the outside of the lane in which the own vehicle is traveling, and the backup control part 10e makes it possible to allow the own vehicle to travel on the target traveling course with a less feeling of strangeness to the driver.

In the vehicle control device 100 according to this embodiment, the limiting condition is set differently depending on a selected one of the driving support modes (FIGS. 9 to 13), so as to define a region in which the own vehicle 1 is permitted to travel, so that it is possible to appropriately calculate the corrected traveling course according to the driving support modes. Further, even in the situation where no corrected traveling course satisfying this limiting condition is obtained, the backup control part 10e makes it possible to allow the own vehicle to travel on the target traveling course with a less feeling of strangeness to the driver.

In the vehicle control device 100 according to this embodiment, the limiting condition includes a traveling parameter regarding a motion of the own vehicle 1 (FIG. 13), so that a traveling course causing an unreasonable motion of the own vehicle 1 can be excluded, even when it is a travelable traveling course. Further, even in the situation where no corrected traveling course satisfying this limiting condition is obtained, the backup control part 10e makes it possible to allow the own vehicle to travel on the target traveling course with a less feeling of strangeness to the driver.

In the vehicle control device 100 according to this embodiment, the traveling parameter to be used as the limiting condition includes an acceleration of the own vehicle 1, a yaw rate of the own vehicle, or a steering angle of the own vehicle, so that a traveling course causing an excessive increase in acceleration or the like of the own vehicle 1 can be excluded, even when it is a travelable traveling course. Further, even in the situation where no corrected traveling course satisfying this limiting condition is obtained, the backup control part 10e makes it possible to allow the own vehicle to travel on the target traveling course with a less feeling of strangeness to the driver.

In the vehicle control device 100 according to this embodiment, the acceleration/deceleration of the own vehicle 1 traveling on the target traveling course is calculated so as to avoid the situation where the own vehicle 1 enters a region which does not satisfy the upper limit of the relative speed (FIG. 6), so that it is possible to avoid collision without giving the driver a strong feeling of strangeness, while reducing the computational load on the vehicle control device 100.

Although the present invention has been described based on a preferred embodiment thereof, it is to be understood that various changes and modifications will be made therein.

LIST OF REFERENCE SIGNS

1: vehicle
10: vehicle control and computing unit (ECU)
10a: input processing part (obstacle detection part)
10b: target object selection part
10c: target traveling course calculation part
10d: corrected traveling course calculation part
10e: backup control part
10f: main control part
10g: output adjustment part
20: vehicle exterior camera
21: vehicle interior camera (forward camera)
22: millimeter-wave radar (forward radar)
23: vehicle speed sensor
24: acceleration sensor
25: yaw rate sensor
26: steering angle sensor
27: accelerator sensor
28: brake sensor
29: position measurement system
30: navigation system
31: engine control system
32: brake control system
33: steering control system
35: driver manipulation unit (driving support mode setting unit)
36a: ISA switch
36b: TJA switch
36c: ACC switch
37a: distance setting switch
37b: vehicle speed setting switch
40: speed distribution zone
100: vehicle control device

EP 3 715 204 A1

**Claims**

1. A vehicle control device for supporting a driver to drive a vehicle, comprising:

an obstacle detection part to detect an obstacle;
a target traveling course calculation part to calculate a target traveling course of an own vehicle;
a corrected traveling course calculation part to correct the target traveling course calculated by the target traveling course calculation part, to calculate a corrected traveling course;
a main control part to compute a target steering angle and a target acceleration/deceleration appropriate for traveling on the corrected traveling course calculated by the corrected traveling course calculation part;
a backup control part to compute the target steering angle and the target acceleration/deceleration appropriate for traveling on the target traveling course calculated by the target traveling course calculation part; and
an output adjustment part to output, as a control signal, the target steering angle and the target acceleration/deceleration calculated by the main control part, or the target steering angle and the target acceleration/deceleration calculated by the backup control part,
wherein:

the corrected traveling course calculation part is configured to, set an upper limit of a relative speed which is permissible when the own vehicle passes a lateral side of the obstacle, and to calculate the corrected traveling course based on the upper limit of the relative speed, a given evaluation function, and a given limiting condition, when the obstacle to be avoided is detected by the obstacle detection part; and
the output adjustment part is configured to output, as the control signal, the target steering angle and the target acceleration/deceleration calculated by the backup control part when the corrected traveling course calculation part fails to calculate any corrected traveling course satisfying the limiting condition.

2. The vehicle control device as recited in claim 1, wherein the limiting condition is set in a region outside a lane in which the own vehicle is traveling.

3. The vehicle control device as recited in claim 1 or 2, which further comprises a driving support mode setting unit for allowing selection among a plurality of driving support modes, wherein the limiting condition is set differently depending on a selected one of the driving support modes, so as to define a region in which the own vehicle is permitted to travel.

4. The vehicle control device as recited in any one of claims 1 to 3, wherein the limiting condition includes a traveling parameter regarding a motion of the own vehicle.

5. The vehicle control device as recited in claim 4, wherein the traveling parameter includes an acceleration of the own vehicle, a yaw rate of the own vehicle, or a steering angle of the own vehicle.

6. The vehicle control device as recited in any one of claims 1 to 5, wherein the backup control part is configured to change only the target acceleration/deceleration so as to avoid a situation where the own vehicle traveling on the target traveling course enters a region which does not satisfy the upper limit of the relative speed.

# FIG.1A

100

10

20 — vehicle exterior camera

21 — vehicle interior camera

22 — radar

23 — vehicle speed sensor

24 — acceleration sensor

25 — yaw rate sensor

26 — steering angle sensor

27 — accelerator sensor

28 — brake sensor

29 — position measurement system

30 — navigation system

ECU

engine control — 31

brake control — 32

steering control — 33

driver manipulation unit — 35

# FIG.1B

35

| | | |
|---|---|---|
| Distance + | | Set + |
| Cansel | | Resume |
| Distance − | | Set - |

37a

37b

| 36a | ISA switch | TJA switch | ACC switch | 36c |
|---|---|---|---|---|

36b

# FIG.2

FIG.3

EP 3 715 204 A1

# FIG.4

EP 3 715 204 A1

# FIG.5

EP 3 715 204 A1

FIG.6

# FIG.7

# FIG.8

# FIG.9

| During automatic steering (TJA, 0 k/h to 200 k/h) + detection of opposed lane edges | ⇒ | Target traveling course: middle of lane Limiting condition: region outside lane |
|---|---|---|

# FIG.10

| During automatic steering (TJA, 0 k/h to 60 k/h) + no detection of opposed lane edges + presence of preceding vehicle | ⇒ | Target traveling course: trajectory of preceding vehicle Limiting condition: region outside width of own vehicle based on trajectory of preceding vehicle |
|---|---|---|

# FIG.11

| During automatic steering<br>+ no detection of opposed lane edges<br>+ absence of preceding vehicle | ⇨ | Target traveling course: future traveling trajectory based on current driving state of own vehicle<br>Limiting condition: region outside width of own vehicle based on future traveling trajectory |
| --- | --- | --- |

A R A

# FIG.12

| During manual steering (ACC)<br>+ detection of opposed lane edges<br>+ presence of driving inten | ⇨ | Target traveling course: position of own vehicle<br>Limiting condition: region outside lane |
| --- | --- | --- |

A R 1 A

# FIG.13

| | | During TJA control |
|---|---|---|
| Longitudinal acceleration of own vehicle | $m/s^2$ | ±3 |
| Lateral acceleration of own vehicle | $m/s^2$ | ±4 |
| Longitudinal jerk of own vehicle | $m/s^3$ | ±5 |
| Lateral jerk of own vehicle | $m/s^3$ | ±2 |
| Steering angle of own vehicle | deg | ±90 |
| Steering angular speed of own vehicle | deg/s | ±90 |
| Yaw rate of own vehicle | deg/s | ±10 |

FIG.14 ( START )

Detecting traveling road information
and vehicle state information
(lane width, road shape) ——S1

Detecting object information
(preceding vehicle, obstacle, traffic right,
pedestrian crossing, etc.) ——S2

Calculating target traveling course
(middle, inward side or
outward side of lane) ——S3

Calculating corrected traveling course
(calculating avoidance courses
based on object information) ——S4

Computing for main control
and backup control ——S5

Computing reliability
of corrected traveling course ——S6

S7
Is
corrected traveling course ——— NO
appropriate?

YES

S9
Is there
no abnormity in forward ——— NO
camera and radar
?

YES

S8    S10    S11

Adopting target values | Adopting target values | Informing driver
based on main control | based on backup control | of actual situation

( RETURN )

# FIG.15

Rc1    Rc2

40

3

A    A

R

1

Limiting condition:
region outside lane width

# FIG.16

Impossible to
calculate corrected
traveling course

Lane change
to immediately
forward region,
etc.

R

3

1

# FIG.17

42

Rc1    R    Rc2

1

# FIG.18

Rc1

3

R

Malfunction of
rearward radar

1

## INTERNATIONAL SEARCH REPORT

| | International application No. |
|---|---|
| | PCT/JP2018/048232 |

### A. CLASSIFICATION OF SUBJECT MATTER
Int.Cl. B60W30/10(2006.01)i, B60W30/09(2012.01)i, B60W30/12(2006.01)i

According to International Patent Classification (IPC) or to both national classification and IPC

### B. FIELDS SEARCHED
Minimum documentation searched (classification system followed by classification symbols)
Int.Cl. B60W10/00-50/16

Documentation searched other than minimum documentation to the extent that such documents are included in the fields searched
| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2016-38837 A (NISSAN MOTOR CO., LTD.) 22 March 2016, paragraphs [0011], [0013]-[0015], [0023]-[0025], [0030], [0034], [0036], [0042], [0043], [0048], [0051]-[0056], [0070]-[0073], [0091], [0101], [0102], fig. 2 (Family: none) | 1-6 |
| Y | JP 2017-16645 A (MITSUBISHI ELECTRIC CORPORATION) 19 January 2017, paragraphs [0007], [0017]-[0028] & US 2016/0375901 A1, paragraphs [0006], [0026]-[0037] & DE 102016111691 A1 | 1-6 |

☒ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28.01.2019 | 05.02.2019 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/048232 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2010-6334 A (TOYOTA MOTOR CORPORATION) 14 January 2010, paragraphs [0048], [0094]-[0099], fig. 3<br>(Family: none) | 6<br>1-5 |
| A | JP 2016-37267 A (NISSAN MOTOR CO., LTD.) 22 March 2016, paragraphs [0018], [0019], [0037]-[0045], [0071]-[0074], fig. 2<br>(Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2010155545 A